# EUROPÄISCHE PATENTSCHRIFT

(11) **EP 1 490 440 B1**
(45) Veröffentlichungstag und Bekanntmachung des Hinweises auf die Patenterteilung: **23.08.2006**
(21) Anmeldenummer: 03722345.0
(22) Anmeldetag: 18.03.2003
(51) Int. Cl.: C09B 62/006, C09B 62/008, C09B 62/01

(54) **WASSERLÖSLICHE REAKTIVE MONO- UND DISAZOFARBSTOFFE**
WATER-SOLUBLE REACTIVE MONO- AND DI-AZO DYES
COLORANTS MONOAZOIQUES ET DISAZOIQUES SOLUBLES DANS L'EAU

(30) Priorität: 22.03.2002 DE 10212771
(43) Veröffentlichungstag der Anmeldung: 29.12.2004
(73) Patentinhaber: DyStar Textilfarben GmbH & Co. Deutschland KG, 65926 Frankfurt am Main (DE)
(72) Erfinder: MEIER, Stefan, 60529 Frankfurt (DE); RUSS, Werner, 65439 Flörsheim-Wicker (DE); EHRENBERG, Stefan, 65795 Hattersheim (DE)
(86) Internationale Anmeldenummer: PCT/EP2003/002794
(87) Internationale Veröffentlichungsnummer: WO 2003/080738

(56) Entgegenhaltungen:
- EP-A- 0 785 237
- DATABASE WPI Section Ch, Week 198618 Derwent Publications Ltd., London, GB; Class E21, AN 1986-116715 XP002251222 & JP 61 057650 A (MITSUBISHI CHEM IND LTD) , 24. März 1986 (1986-03-24) in der Anmeldung erwähnt
- DATABASE WPI Section Ch, Week 198603 Derwent Publications Ltd., London, GB; Class E21, AN 1986-018581 XP002251221 & JP 60 243157 A (MITSUBISHI CHEM IND LTD) , 3. Dezember 1985 (1985-12-03) in der Anmeldung erwähnt

## Beschreibung

Die vorliegende Erfindung liegt auf dem Gebiet der faserreaktiven Farbstoffe. Aus der EP-A 785 237 sind Reaktivfarbstoffe bekannt, die das Strukturelement 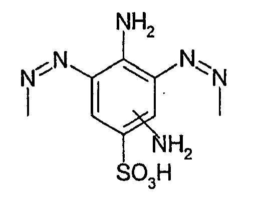 enthalten.

Die vorliegende Erfindung betrifft nun Farbstoffe der allgemeinen Formel (I) 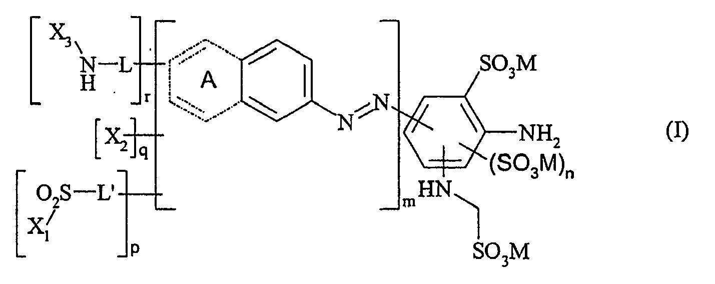 worin
- m: 1 oder 2,
- n: 0 oder 1,
- q: 0, 1, 2 oder 3 und
- p: 0, 1 oder 2,
- r: 0, 1 oder 2 bedeuten, wobei
- p + r: gleich 1 oder 2 ist und
- X₁: für einen Rest -CH₂CH₂Z oder -CH=CH₂ steht,worin Z für eine Gruppierung steht, die durch Einwirkung von Alkali eliminiert werden kann,
- M: Wasserstoff, Ammonium, ein Alkalimetall oder das Äquivalent eines Erdalkalimetalls,
- X₂: Alkyl, Alkoxy, Halogen, COOM oder SO₃M,
- L: eine direkte Bindung oder Alkylen,
- L': eine direkte Bindung oder eine Gruppe der Formel 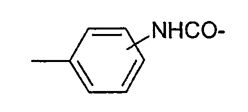
- X₃: eine heteföcyclische Reaktivgruppe der allgemeinen Formel (lla) oder (llb) 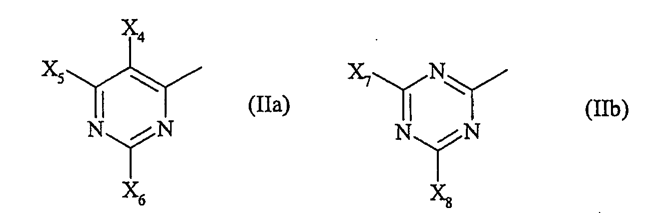 oder eine Reaktivgruppe der Formel (llc), (lld) oder (lle) 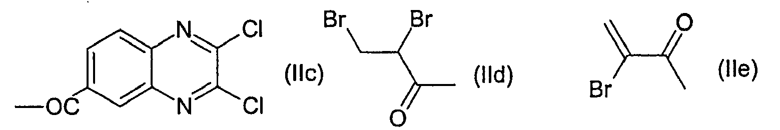
bedeuten, worin
X₄ bis X₆ unabhängig voneinander Wasserstoff oder Halogen bedeuten, mit der Maßgabe, dass wenigstens ein Rest X₄ bis X₆ Halogen ist,
X₇ Halogen oder X₈ bedeutet und
X₈ für einen Substituenten der allgemeinen Formel (III) steht 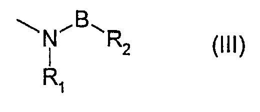 worin
- R₁: für Wasserstoff, Alkyl oder Aryl,
- B: für Alkylen, durch ein Sauerstoffatom unterbrochenes Alkylen, Arylen oder Arylalkylen und
- R₂: für einen Rest SO₃M, SO₂-CH₂CH₂Z oder SO₂-CH = CH₂ steht, worin Z wie oben angegeben definiert ist
und wobei der mit A gekennzeichnete Ring entweder abwesend oder anwesend ist.

In der Verbindung der allgemeinen Formel (I) kann ein für M stehendes Alkalimetall insbesondere Lithium, Natrium und Kalium sein, während als Erdalkalimetall insbesondere Calcium in Frage kommt. Bevorzugt steht M für Wasserstoff oder Natrium.
Für X₂, X₄ bis X₆ und X₇ stehendes Halogen bedeutet insbesondere Fluor oder Chlor.
Für R₁ oder X₂ stehendes Alkyl ist bevorzugt (C₁-C₈)-Alkyl und besonders bevorzugt (C₁-C₄)-Alkyl. Beispiele für derartige Alkylgruppen sind Methyl, Ethyl, n-Propyl, i-Propyl, n-Butyl, i-Butyl, sek.-Butyl und tert.-Butyl. Ganz besonders bevorzugte Alkylgruppen sind Methyl und Ethyl. Analoges gilt für für R₁ oder X₂ stehendes Alkoxy. Ganz besonders bevorzugte Alkoxy-Gruppen sind also Methoxy und Ethoxy.
Für R₁ stehendes Aryl ist insbesondere Phenyl, das auch durch zum Beispiel (C₁-C₄)-Alkyl, (C₁-C₄)-Alkoxy, Chlor, Fluor oder die SO₃H-Gruppe ein- oder mehrfach substituiert sein kann.
Für B oder L stehendes Alkylen ist bevorzugt (C₁-C₈)-Alkylen) und besonders bevorzugt (C₁-C₄)-Alkylen. Beispiele für derartige Alkylengruppen sind Methylen, Ethylen, n-Propylen, i-Propylen und Butylen. Durch ein Sauerstoffatom unterbrochenes Alkylen ist insbesondere - (CH₂)ᵤ-O-(CH₂)ᵥ-, worin u und v unabhängig voneinander für eine Zahl von 1 bis 3 stehen.
Für B stehendes Arylen ist insbesondere Phenylen und Naphthylen, wobei meta- und para-Phenylen bevorzugt sind.
Für B stehendes Arylalkylen ist bevorzugt eine Gruppe der allgemeinen Formeln (IVa) oder (IVb) 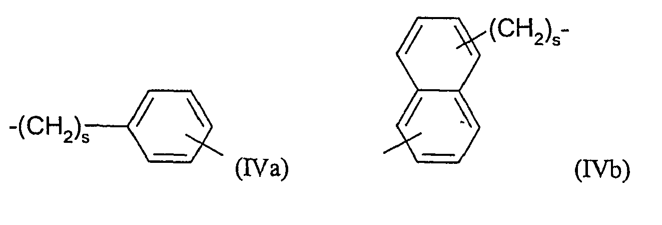 worin s für eine Zahl von 1 bis 4 steht und die freie Valenz am aromatischen Kern sowohl an N, als auch an R₂ gebunden sein kann.
Für Z stehende Reste, die durch Einwirkung von Alkali, d.h. also unter Färbebedingungen, eliminiert werden können, sind beispielsweise Chlor, Brom, Sulfato, Thiosulfato, Phosphato, (C₂-C₅)-Alkanoyloxy wie z.B. Acetyloxy, Benzoyloxy, Sulfobenzoyloxy oder p-Toluylsulfonyloxy, wobei Sulfato bevorzugt ist.
Die Gruppen "Sulfato" "Thiosulfato" und "Phosphato" schließen sowohl deren Säureform als auch deren Salzform ein. Demgemäß entsprechen Thiosulfatogruppen der allgemeinen Formel -S-SO₃M, Phosphatogruppen der allgemeinen Formel -OPO₃M₂ und Sulfatogruppen der allgemeinen Formel -OSO₃M, in welchen M die obengenannte Bedeutung besitzt.

Bevorzugte Verbindungen der allgemeinen Formel (I) erfüllen die Bedingung p + r =1, während besonders bevorzugte Verbindungen der allgemeinen Formel (I) die Bedingung p + r= 2 erfüllen. Falls m =1 1 ist, ist bevorzugt p + r=1.

X₂ bedeutet bevorzugt (C₁-C₄)-Alkyl, (C₁-C₄)-Alkoxy oder SO₃M und besonders bevorzugt Methyl, Ethyl, Methoxy, Ethoxy oder SO₃M, worin M für Wasserstoff oder Natrium steht.
L und L' stehen bevorzugt für eine direkte Bindung.
X₃ steht bevorzugt für eine Gruppe der Formel 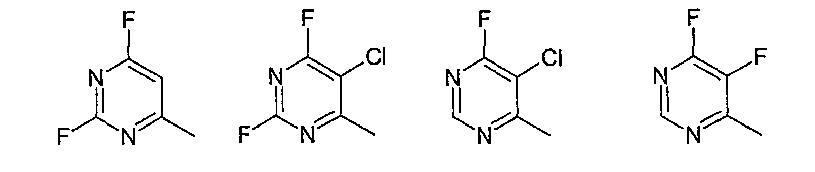 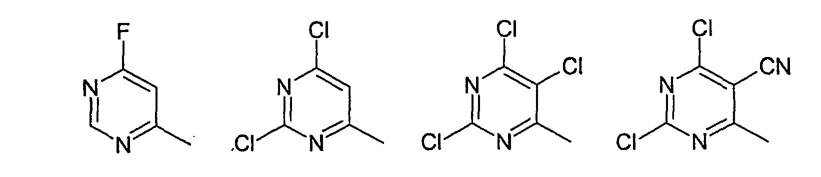 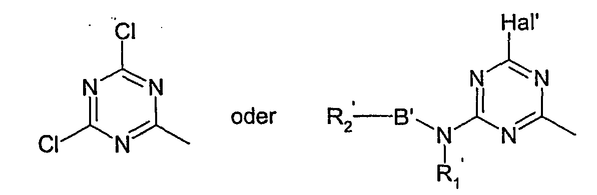 wobei
Hal' für Chlor oder Brom,
R₁' für Wasserstoff, Methyl, Ethyl oder Phenyl,
B' für Ethylen, Propylen oder - CH₂CH₂-O-CH₂CH₂- und
R₂' für - SO₂CH₂CH₂OSO₃M oder -SO₂CH = CH₂ steht.

Falls r für 2 steht, können die Reste X₃ gleiche oder verschiedene Bedeutungen haben. Ebenso können die Reste X₂ gleiche oder verschiedene Bedeutungen haben, falls q 2 oder 3 bedeutet und können die Reste X₁ gleiche oder verschiedene Bedeutungen haben, falls p für 2 steht.

Besonders bevorzugte Farbstoffe der allgemeinen Formel (I) entsprechen der allgemeinen Formel (Ia) 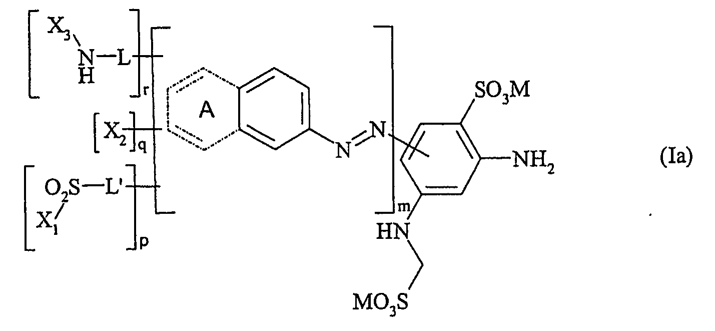 worin X₁ bis X₃, A, L, L', M, m, r, p und q wie oben angegeben definiert sind.

Besonders bevorzugte Farbstoffe der allgemeinen Formel (I) entsprechen außerdem der allgemeinen Formel (Ib) 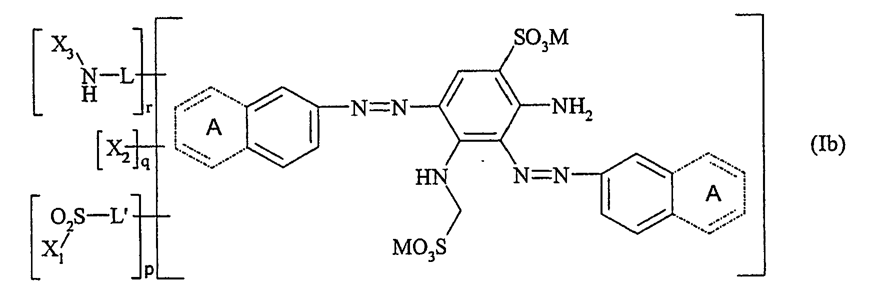 worin X₁, bis X₃, A, L, L', M, r, p und q wie oben angegeben definiert sind.

Besonders bevorzugte Farbstoffe der allgemeinen Formel (I) entsprechen weiterhin der allgemeinen Formel (Ic) 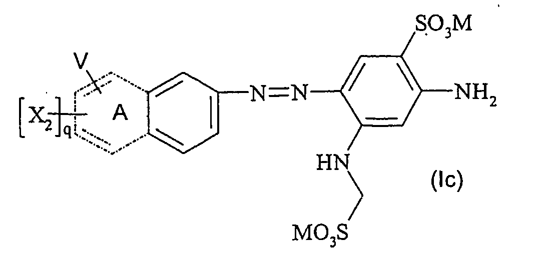 worin M, X₂ und q wie oben angegeben definiert sind und V für X₃-NH-L- oder X₁-O₂S-L'- steht, wobei X₁, X₃, A, L und L' wie oben angegeben definiert sind.

Ganz besonders bevorzugte Farbstoffe der allgemeinen Formel (I) entsprechen den nachfolgenden allgemeinen Formeln (Id) bis (Iq) 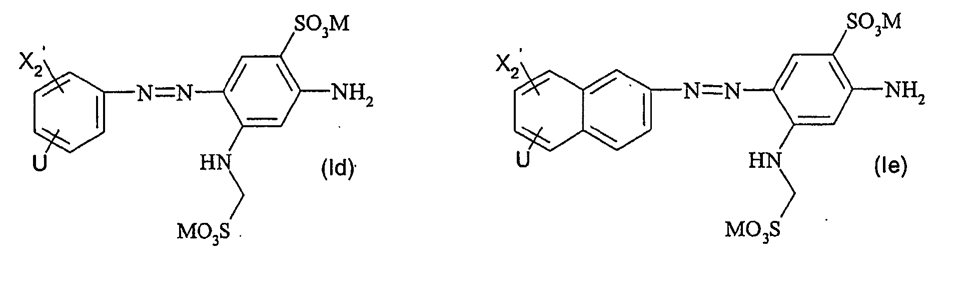 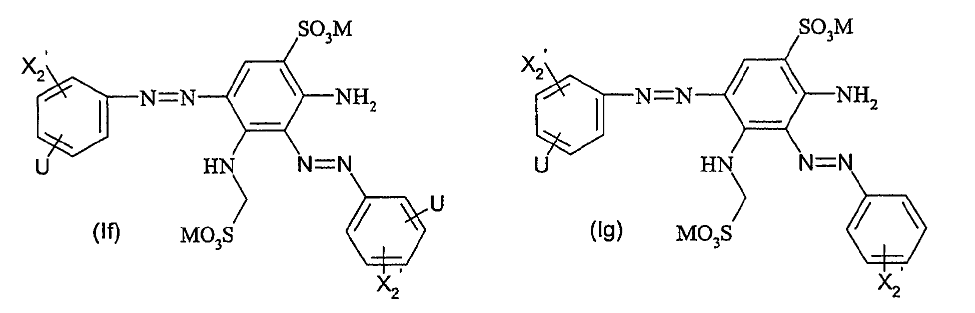 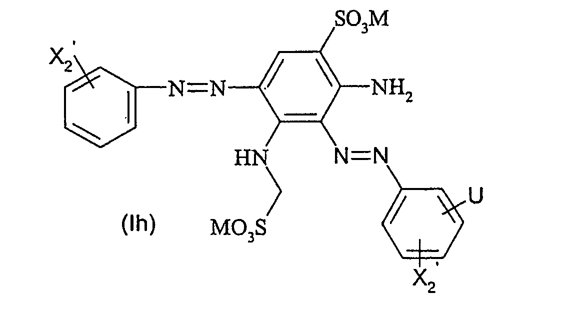 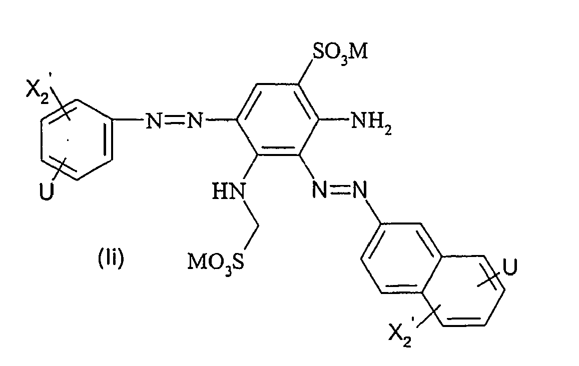 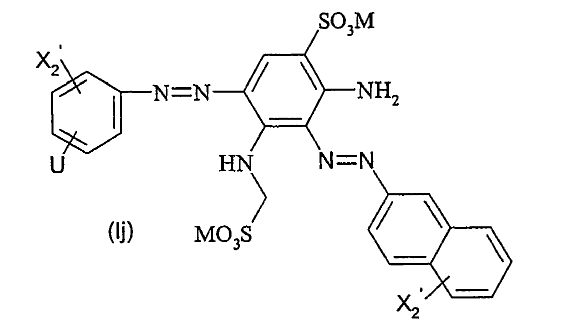 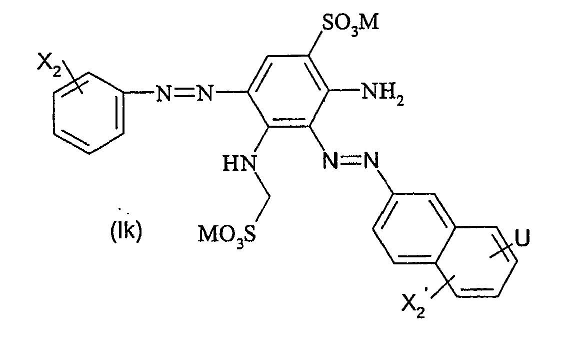 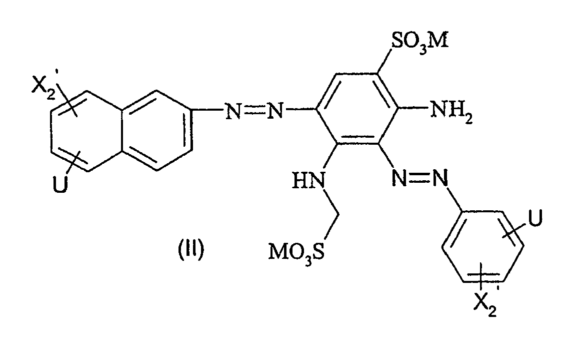 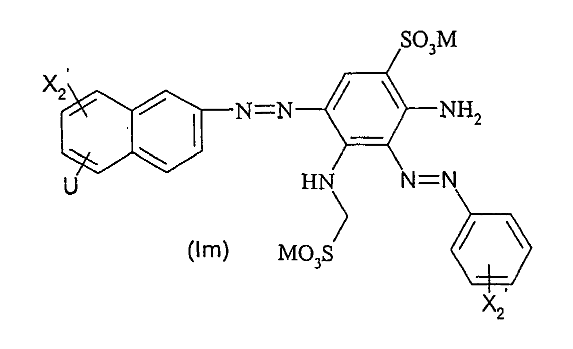 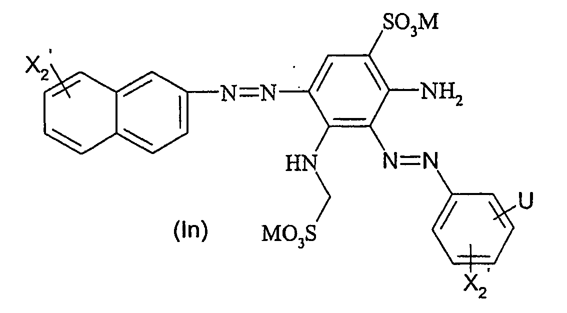 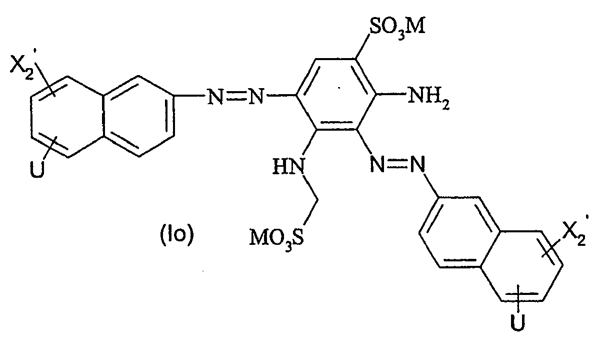 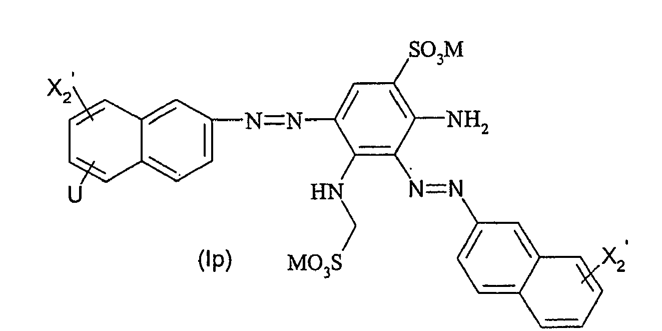 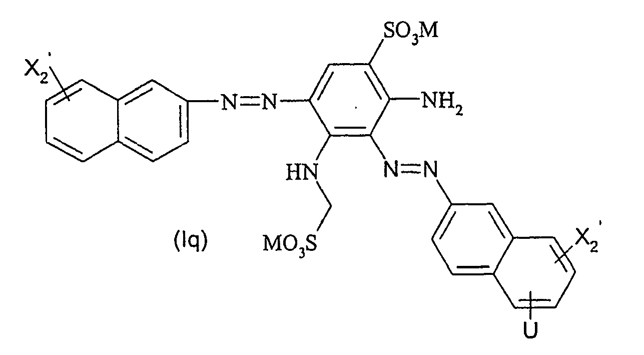 worin jeweils
- M: Wasserstoff oder Natrium und
- X₂': Wasserstoff, Methyl, Ethyl, Methoxy, Ethoxy, COOM oder SO₃M bedeuten und
- U: für - SO₂CH₂CH₂OSO₃M, -SO₂CH = CH₂ oder - NH-U' steht, worin M Wasserstoff oder Natrium bedeutet und U' für eine der Formeln 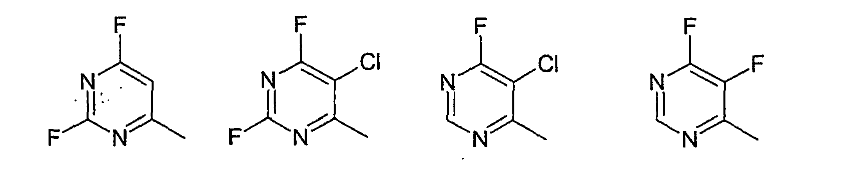 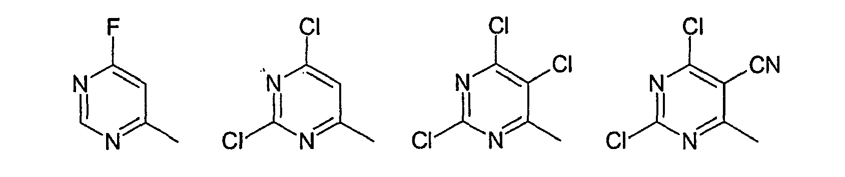 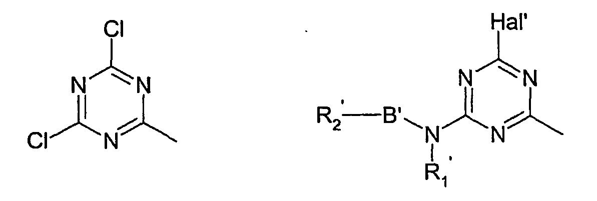
steht, wobei
Hal' für Chlor oder Fluor,
R₁' für Wasserstoff, Methyl, Ethyl oder Phenyl,
B' für Ethylen, Propylen oder - CH₂CH₂-O-CH₂CH₂- und
R₂' für - SO₂CH₂CH₂OSO₃M oder -SO₂CH = CH₂ steht.

Die erfindungsgemäßen Farbstoffe der allgemeinen Formel (I) liegen in der Regel als Präparation in fester oder in flüssiger (gelöster) Form vor. In fester Form enthalten sie im allgemeinen die bei wasserlöslichen und insbesondere faserreaktiven Farbstoffen üblichen Elektrolytsalze, wie Natriumchlorid, Kaliumchlorid und Natriumsulfat und können desweiteren die in Handelsfarbstoffen üblichen Hilfsmittel enthalten, wie Puffersubstanzen, die einen pH-Wert in wäßriger Lösung zwischen 3 und 7 einzustellen vermögen, wie Natriumacetat, Natriumborat, Natriumhydrogencarbonat, Natriumdihydrogenphosphat, Natriumtricitrat und Dinatriumhydrogenphosphat, geringe Mengen an Sikkativen oder, falls sie in flüssiger, wäßriger Lösung (einschließlich des Gehaltes von Verdickungsmitteln, wie sie bei Druckpasten üblich sind) vorliegen, Substanzen, die die Haltbarkeit dieser Präparationen gewährleisten, wie beispielsweise schimmelverhütende Mittel.
Bevorzugt liegen die erfindungsgemäßen Farbstoffe der allgemeinen Formel (I) als Farbstoffpulver oder als Farbstoffgranulat mit einem Gehalt von 10 bis 80 Gew.-%, bezogen auf das Pulver bzw. das Granulat, an einem Elektrolytsalz, das auch als Stellmittel bezeichnet wird, vor. Granulate weisen insbesondere Korngrößen von 50 bis 500 m auf. Diese festen Präparationen können zudem die erwähnten Puffersubstanzen in einer Gesamtmenge von bis zu 10 Gew.-%, bezogen auf die Präparation enthalten. Sofern die Farbstoffe in wäßriger Lösung vorliegen, so beträgt der Gesamtfarbstoffgehalt in diesen wäßrigen Lösungen bis zu etwa 50 Gew.-%, wie beispielsweise zwischen 5 und 50 Gew.-%., wobei der Elektrolytsalzgehalt in diesen wäßrigen Lösungen bevorzugt unterhalb 10 Gew.-%, bezogen auf die wäßrige Lösung, beträgt. Die wäßrigen Lösungen (Flüssigpräparationen) können die erwähnten Puffersubstanzen in der Regel in einer Menge von bis zu 10 Gew.-%, bevorzugt bis zu 2 Gew.-%, enthalten.

Erfindungsgemäße Farbstoffe der allgemeinen Formel (1), in denen p≠ 0 ist und/oder die eine Gruppe der Formel (IIb) enthalten, worin X₈ für eine Gruppe der Formel (III) steht, können bei gleichem Chromophor hinsichtlich der faserreaktiven Gruppe SO₂X₁ bzw. R₂ unterschiedliche Struktur besitzen. Insbesondere kann bei gleichem Chromophor SO₂X₁ bzw. R₂ zum einen -SO₂CH = CH₂ und zum anderen -SO₂CH₂CH₂Z, besonders bevorzugt β-Sulfatoethylsulfonyl, bedeuten. Dabei kann der Anteil des Farbstoffes in Vinylsulfonyl-Form bei bis zu etwa 30 Mol-%, bezogen auf den jeweiligen Farbstoffchromophor, liegen. Bevorzugt liegt der Anteil an Vinylsulfonyl-Farbstoff zu β-ethylsubstituiertem Farbstoff im Molverhältnis zwischen 5:95 und 30:70.

Die erfindungsgemäßen Farbstoffe der allgemeinen Formel I können beispielsweise dadurch hergestellt werden, daß man ein aromatisches Amin der allgemeinen Formel (V) 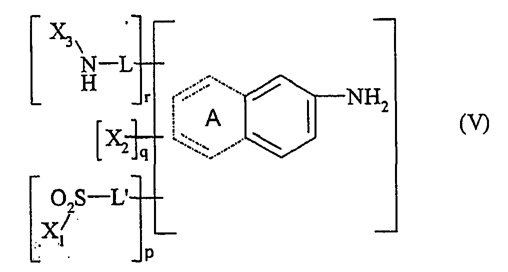 worin p, q, r, A, L, X₁, X₂ und X₃ die oben angegebenen Bedeutungen haben, diazotiert und auf eine Verbindung der allgemeinen Formel (VI) 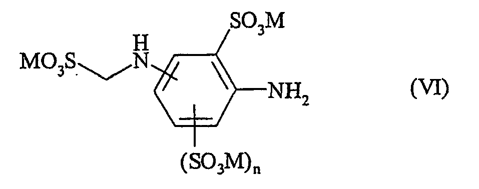 kuppelt.
Setzt man bei diesem Herstellungsverfahren pro Äquivalent Verbindung der allgemeinen Formel (Vl) ein Äquivalent Verbindung der allgemeinen Formel (V) ein, so entstehen erfindungsgemäße Farbstoffe der allgemeinen Formel (I), in denen m für 1 steht. Setzt man dagegen pro Äquivalent Verbindung der allgemeinen Formel (VI) zwei Äquivalente Verbindung der allgemeinen Formel (V) ein, so entstehen erfindungsgemäße Farbstoffe der allgemeinen Formel (I), in denen m für 2 steht.
Soll eine erfindungsgemäße Verbindung der allgemeinen Formel (I), in der m für 2 steht, hergestellt werden, so gilt in den aromatischen Verbindungen der allgemeinen Formel (V) die Bedingung p + r =1 oder 2 nicht. p und r sind vielmehr so zu wählen, daß die erhaltene erfindungsgemäße Verbindung der allgemeinen Formel (I) die Bedingung p + r = 1 oder 2 erfüllt.
In einer bevorzugten Ausführungsform des erfindungsgemäßen Herstellungsverfahrens wird zunächst ein Äquivalent aromatisches Amin der allgemeinen Formel (V) diazotiert und mit einem Äquivalent einer Verbindung der allgemeinen Formel (VIa) 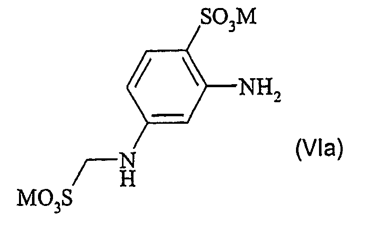 worin M wie oben angegeben definiert ist, im pH-Bereich zwischen 0 und 6, vorzugsweise zwischen 1 und 4, gekuppelt. Die dabei erhaltenen Monoazofarbstoffe entsprechen der allgemeinen Formel (Ir) 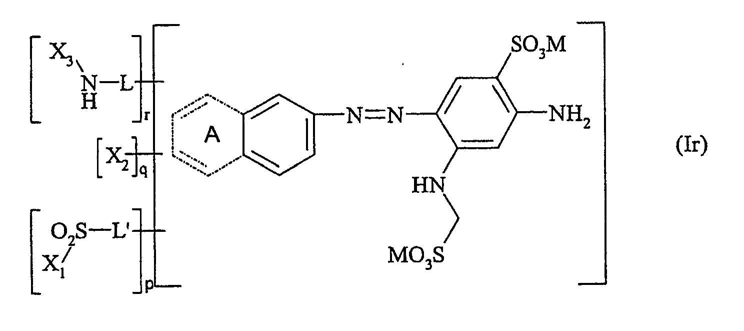 worin p, q, r, A, L, X₁, X₂, X₃ und M die oben angegebenen Bedeutungen haben. Die Farbstoffe der allgemeinen Formel (Ir) färben Baumwolle in goldgelben bis rotstichig-gelben Tönen mit guten Allgemeinechtheiten.

Die Farbstoffe der allgemeinen Formel (Ir) können falls gewünscht nun mit einem zweiten Äquivalent des aromatischen Amins der allgemeinen Formel (V), welches zuvor nach bekannten Methoden diazotiert wurde, zu Disazofarbstoffen der allgemeinen Formel (la) bzw. (lb) umgesetzt werden.

Bei der erfindungsgemäßen Herstellung von Verbindungen der allgemeinen Formel (I), in denen m = 2 ist, können die beiden Äquivalente aromatisches Amin bezüglich der Variablen p, q, r, L, L', X₁, X₂ und X₃ gleich oder verschieden sein. Falls die beiden Äquivalente aromatisches Amin bezüglich der Variablen p, q, r, L, L', X₁, X₂ und X₃ gleich sind, so ist es besonders bevorzugt, die Umsetzung in einem Eintopfverfahren ("Eintopfkupplung") zu bewerkstelligen. In diesem Fall werden dann zwei Äquivalente des aromatischen Amins der allgemeinen Formel (V) diazotiert und auf ein Äquivalent Verbindung der allgemeinen Formel (VI) gekuppelt.
Die gemäß Eintopfkupplung erhaltenen erfindungsgemäßen Verbindungen der allgemeinen Formel (I) sind identisch mit den Verbindungen, die gemäß "serieller Kupplung", das heißt durch zweimaliges, hintereinander erfolgendes Ankuppeln jeweils eines Äquivalentes aromatischen Amins der allgemeinen Formel (V) derselben chemischen Struktur, erhalten werden.

Erfindungsgemäße Farbstoffe der allgemeinen Formel (I) in denen m für 2 steht und p + r = 1 ist, können dadurch hergestellt werden, daß ein aromatisches Amin der allgemeinen Formel (V), in dem p + r = 0 ist, diazotiert und mit einer Verbindung der allgemeinen Formel (VI) zu einer Verbindung der allgemeinen Formel (VII) 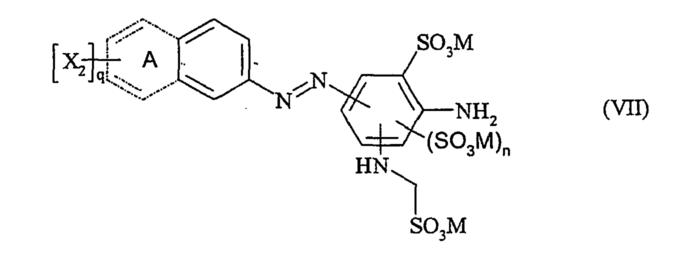 worin q, n, A, X₂ und M wie oben angegeben definiert, umgesetzt werden. In einem zweiten Schritt wird dann ein aromatisches Amin der allgemeinen Formel (V), in dem p + r = 1 ist, diazotiert und mit der verbindung der allgemeinen Formel (VII) zum erfindungsgemäßen Disazofarbstoff weitergekuppelt. Umgekehrt lässt sich natürlich auch zunächst ein aromatisches Amin der allgemeinen Formel (V), in dem p + r=1 1 ist, diazotieren und mit einer Verbindung der allgemeinen Formel (VI) zu erfindungsgemäßen Farbstoffen der allgemeinen Formel (Is) 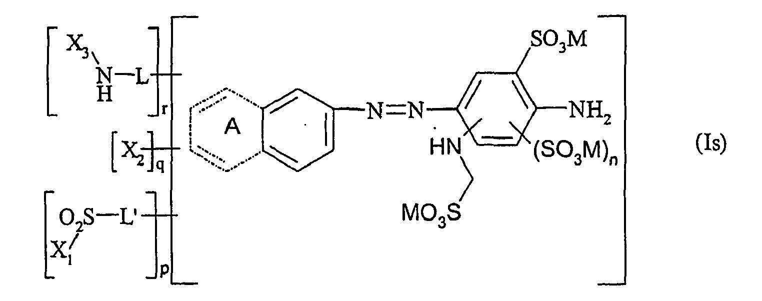 worin n, p, q, r, A, L, X₁, X₂, X₃ und M wie oben angegeben definiert sind und worin p + r = 1 ist, kuppeln. Im zweiten Schritt wird dann ein aromatisches Amin der allgemeinen Formel (V), in dem p + r = 0 ist, diazotiert und zum erfindungsgemäßen Disazofarbstoff weitergekuppelt.
In beiden Fällen erhält man monofunktionelle Disazoreaktivfarbstoffe, die bei geeigneter Wahl von erster und zweiter Diazokomponente isomer zueinander sind.
Bevorzugte aromatische Amine der allgemeinen Formel (V), in denen p + r = 0 ist, sind Anilin- oder Naphthylamin-Derivate, insbesondere aber deren Sulfonsäuren. Als Beispiele seien Anilin-2-sulfonsäure, Anilin-3-sulfonsäure, Anilin-4-sulfonsäure, 4-Methylanilin-2-sulfonsäure, 4-Methylanilin-3-sulfonsäure, 4-Methylanilin-2,5-disulfonsäure, 4-Methoxyanilin-2-sulfonsäure, 4-Methoxyanilin-2,5-disulfonsäure, 2-Chloranilin-5-sulfonsäure, 2-Chloranilin-4-sulfonsäure, 2-Methoxy-5-methylanilin-4-sulfonsäure, 2,5-Dimethoxyanilin-4-sulfonsäure, Anilin-2,4-disulfonsäure, Anilin-2,5-disulfonsäure, 2-Methoxyanilin-5-sulfonsäure, 1-Aminonaphthalin-2-sulfonsäure, 1-Aminonaphthalin-3-sulfonsäure, 1-Aminonaphthalin-4-sulfonsäure, 1-Aminonaphthalin-5-sulfonsäure, 1-Aminonaphthalin-6-sulfonsäure, 1-Aminonaphthalin-7-sulfonsäure, 1-Aminonaphthalin-8-sulfonsäure, 1-Aminonaphthalin-3,6-disulfonsäure, 1-Aminonaphthalin-3,7-disulfonsäure, 1-Aminonaphthalin-4,8-disulfonsäure, 2-Aminonaphthalin-1-sulfonsäure, 2-Aminonaphthalin-5-sulfonsäure, 2-Aminonaphthalin-6-sulfonsäure, 2-Aminonaphthalin-7-sulfonsäure, 2-Aminonaphthalin-8-sulfonsäure, 2-Aminonaphthalin-1,5-disulfonsäure, 2-Aminonaphthalin-4,8-disulfonsäure, 2-Aminonaphthalin-5,7-disulfonsäure, 2-Aminonaphthalin-6,8-disulfonsäure, 2-Aminonaphthalin-3,6-disulfonsäure, 2-Aminonaphthalin-1,5,7-trisulfonsäure und 2-Aminonaphthalin-3,6,8-disulfonsäure genannt.
Bevorzugte aromatische Amine der allgemeinen Formel (V), in denen p + r ≠ 0 ist, entsprechen den vorgenannten Verbindungen, tragen aber zusätzlich die entsprechende Anzahl von Substituenten - L'- SO₂X₁ bzw. - L-NH-X₃.

Die zur Herstellung der Farbstoffe der allgemeinen Formel (I) notwendigen Diazotierungs- und Kupplungsreaktionen sind dem Fachmann an sich bekannt und können in allgemein üblicher, in der einschlägigen Literatur ausführlich beschriebenen Art und Weise ausgeführt werden.
Die erfindungsgemäßen Farbstoffe der allgemeinen Formel (I) werden bei den angegebenen Herstellungsverfahren als Lösung oder Suspension erhalten und können beispielsweise durch Aussalzen isoliert werden. Die Farbstoffe können auch sprühgetrocknet werden, aber auch ein Eindampfen der Lösung oder Suspension ist möglich.

Die aromatischen Amine der allgemeinen Formel (V) sind an sich bekannt und können nach dem Fachmann geläufigen Methoden hergestellt werden.
Die Verbindungen der allgemeinen Formel (Vl) sind zum Teil ebenfalls beschrieben (beispielsweise 3-Sulfomethylaminoanilin-6-sulfonsäure in JP 60 243157 und JP 61 57650). Sie können beispielsweise hergestellt werden durch Umsetzung von Verbindungen der allgemeinen Formel (VIII) 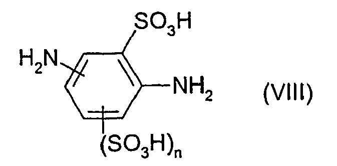 worin n 0 oder 1 bedeutet, mit Formaldehydbisulfit der Formel (IX) 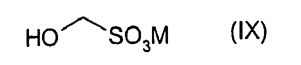 worin M die oben angegebene Bedeutung hat. Üblicherweise wird bei dieser Umsetzung eine Lösung der Verbindung der allgemeinen Formel (VIII) bei einem pH-Wert von 3 bis 9 mit Formaldehydbisulfit versetzt und bei einer Reaktionstemparatur von 30° bis 80°C kondensiert.

Die erfindungsgemäßen Reaktivfarbstoffe der allgemeinen Formel (1) besitzen wertvolle anwendungstechnische Eigenschaften. Sie werden zum Färben und Bedrucken von hydroxy- und/oder carbonamidgruppenhaltigen Materialien, beispielsweise in Form von Flächengebilden, wie Papier und Leder oder von Folien, wie beispielsweise aus Polyamid oder in der Masse, wie beispielsweise von Polyamid und Polyurethan, insbesondere aber in Form von Fasern der genannten Materialien verwendet. Bevorzugt werden sie zum Färben und Bedrucken cellulosehaltiger Fasermaterialien aller Art verwendet. Außerdem eignen sie sich auch zum Färben oder Bedrucken von hydroxygruppenhaltigen Fasern, die in Mischgeweben enthalten sind, z. B. von Gemischen aus Baumwolle mit Polyesterfasern oder Polyamidfasern. Es ist auch möglich, mit ihnen Textilien oder Papier nach dem Inkjet-Verfahren zu bedrucken.

Die vorliegende Erfindung betrifft somit auch die Verwendung der erfindungsgemäßen Reaktivfarbstoffe der allgemeinen Formel (I) zum Färben oder Bedrucken der genannten Materialien bzw. Verfahren zum Färben oder Bedrucken solcher Materialien in an und für sich üblichen Verfahrensweisen, bei welchen man einen oder mehrere erfindungsgemäße Reaktivfarbstoffe der allgemeinen Formel (I) als Farbmittel einsetzt.

Vorteilhafterweise können die bei der Synthese anfallenden Lösungen der erfindungsgemäßen Reaktivfarbstoffe der allgemeinen Formel (I), gegebenenfalls nach Zusatz einer Puffersubstanz, gegebenenfalls auch nach Konzentrieren oder Verdünnen, direkt als Flüssigpräparation der färberischen Verwendung zugeführt werden.

Bevorzugt kommen die genannten Materialien in Form von Fasermaterialien zur Anwendung, insbesondere in Form von Textilfasern, wie Geweben oder Garnen, wie in Form von Strängen oder Wickelkörpern.
Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern. Regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Die erfindungsgemäßen Reaktivfarbstoffe der allgemeinen Formel (I) lassen sich auf den genannten Substraten, insbesondere auf den genannten Fasermaterialien, nach den für wasserlösliche, insbesondere nach den für faserreaktive Farbstoffe bekannten Anwendungstechniken applizieren und fixieren.
So erhält man mit ihnen auf Cellulosefasern nach den Ausziehverfahren aus langer Flotte unter Verwendung von verschiedensten säurebindenden Mitteln und gegebenenfalls neutralen Salzen, wie Natriumchlorid oder Natriumsulfat, Färbungen mit sehr guten, Farbausbeuten. Man färbt bevorzugt in wäßrigem Bad bei Temperaturen zwischen 40 und 105°C, gegebenenfalls bei einer Temperatur bis zu 130°C unter Druck, und gegebenenfalls in Gegenvert von üblichen Färbereihilfsmitteln. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen der Farbstoffe beschleunigenden Neutralsalze können dem Bade gewünschtenfalls auch erst nach Erreichen der eigentlichen Färbetemperatur zugesetzt werden.

Nach dem Klotzverfahren werden auf Cellulosefasern ebenfalls ausgezeichnete Farbausbeuten und ein sehr guter Farbaufbau erhalten, wobei durch Verweilen bei Raumtemperatur oder erhöhter Temperatur, beispielsweise bis zu etwa 60°C, durch Dämpfen oder mit Trockenhitze in üblicher Weise fixiert werden kann.

Ebenfalls nach den üblichen Druckverfahren für Cellulosefasern, die einphasig - beispielsweise durch Bedrucken mit einer Natriumbicarbonat oder ein anderes säurebindendes Mittel enthaltenden Druckpaste und anschließendes Dämpfen bei 100 bis 103°C, - oder zweiphasig - beispielsweise durch Bedrucken mit neutraler oder schwach saurer Druckfarbe und anschließendem Fixieren entweder durch Hindurchführen durch ein heißes elektrolythaltiges alkalisches Bad oder durch Überklotzen mit einer alkalischen elektrolythaltigen Klotzflotte und anschließendem Verweilen oder Dämpfen oder Behandlung mit Trockenhitze des alkalisch überklotzten Materials, - durchgeführt werden können, erhält man farbstarke Drucke mit gutem Stand der Konturen und einem klaren Weißfond. Der Ausfall der Drucke ist von wechselnden Fixierbedingungen nur wenig abhängig.

Bei der Fixierung mittels Trockenhitze nach den üblichen Thermofixierverfahren verwendet man Heißluft von 120 bis 200°C. Neben demüblichen Wasserdampf von 101 bis 103°C kann auch überhitzter Dampf und Druckdampf von Temperaturen bis zu 160°C eingesetzt werden.

Die säurebindenden und die Fixierung der Farbstoffe auf den Cellulosefasern bewirkenden Mittel sind beispielsweise wasserlösliche basische Salze der Alkalimetalle und ebenfalls Erdalkalimetalle von anorganischen oder organischen Säuren oder Verbindungen, die in der Hitze Alkali freisetzen. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittels sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natriumtrichloracetat, Wasserglas oder Trinatriumphosphat.
Die erfindungsgemäßen Reaktivfarbstoffe der allgemeinen Formel (1) zeichnen sich durch hohe Reaktivität, gutes Fixiervermögen, sehr gutes Aufbauvermögen, sowie hohe Licht- und Schweißlichtechtheit aus. Sie können daher nach dem Ausziehfärbeverfahren bei niedrigen Färbetemperaturen eingesetzt werden und erfordern bei Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein, d. h. der Seifverlust sehr gering ist. Sie eignen sich auch besonders zum Druck, vor allem auf Baumwolle, ebenso aber auch zum Bedrucken von stickstoffhaltigen Fasern, z. B. von Wolle oder Seide oder von Mischgeweben, die Wolle oder Seide enthalten.

Des weiteren zeichnen sich die erfindungsgemäßen Reaktivfarbstoffe der allgemeinen Formel (1) darin aus, daß sich nach dem Färbeprozeß auf dem Fasermaterial nicht fixierte Farbstoffanteile sehr leicht auswaschen lassen, ohne daß Weißwäsche, die sich mit in dem Waschprozeß befindet, durch den sich ablösenden Farbstoff angeschmutzt wird. Hieraus ergeben sich Vorteile für den Färbeprozeß, indem Waschzyklen und damit Kosten eingespart werden.

Die mit den erfindungsgemäßen Reaktivfarbstoffen der allgemeinen Formel (1) hergestellten Färbungen und Drucke besitzen, insbesondere auf Cellulosefasermaterialien, eine hohe Farbstärke und eine hohe Faser-Farbstoff-Bindungsstabilität sowohl in saurem als auch in alkalischem Bereich, weiterhin eine gute Lichtechtheit und sehr gute Naßechtheitseigenschaften, wie Wasch-, Wasser-, Seewasser-, Überfärbe- und Schweißechtheiten sowie gute Plissierechtheit, Bügelechtheit und Reibechtheit.

Die nachfolgenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.
Die in den Beispielen formelmäßig beschriebenen Verbindungen sind in Form der freien Säure angegeben. Im allgemeinen werden sie aber in Form ihrer Alkalimetallsalze, wie Lithium-, Natrium oder Kaliumsalze, hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, in die Synthese eingesetzt werden.

Die für die erfindungsgemäßen Farbstoffe angegebenen Absorptionsmaxima (λₘₐₓ im sichtbaren Bereich wurden anhand ihrer Alkalimetallsalze in wäßriger Lösung ermittelt.

### Beispiel 1:

### Synthese einer Verbindung der Formel (VI) (Vorprodukt)

18.8 Teile 2,4-Diaminobenzolsulfonsäure werden in 150 Teilen Wasser suspendiert und durch Zugabe von 20%iger Natriumhydroxid-Lösung neutral gelöst. Bei 20°C gibt man 14.7 g Formaldehydbisulfit (Na-Salz) zu und erwärmt auf 50°C. Bei pH 5.0 bis 5.5 wird 4 Stunden nachgerührt. Die erhaltene Lösung wird eingedampft oder direkt weiter umgesetzt.
Der nach Eindampfen erhaltene, gelbliche Rückstand entspricht der Verbindung der Formel (VIa) 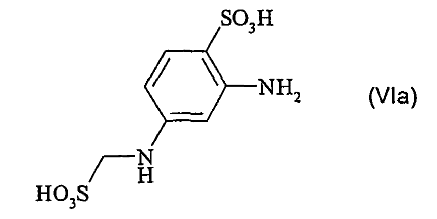 ¹H-NMR (400 MHz, d₆-DMSO): δ (ppm) = 3.77 (d, 2 H, ³J= 6.6 Hz, CH₂), 5.28 (s, 2 H, NH₂), 5.54 (t, 1 H, ³J = 6.6 Hz, NH), 5.82 (dd, 1 H, ³J = 8.1 Hz, ⁴J = 2.2 Hz, Hₐᵣ), 5.86 (d, 1H, 4J = 2.2 Hz, Har), 7.08 (d, 1 H, ³J = 8.1 Hz, Hₐᵣ).

### Beispiel 2:

In eine Suspension von 28.1 g 4-(2'-Sulfatoethylsulfonyl)-anilin in 200 Teilen Wasser trägt man bei 15°C nacheinander 0.5 g eines handelsüblichen Dispergiermittels und 21 Teile 31 %iger Salzsäure ein und rührt 15 Minuten nach.

Anschließend tropft man 13.2 Teile einer 40%igen Natriumnitrit-Lösung in Wasser zu und rührt bei Überschuß Nitrit 60 Minuten nach. Überschüssiges Nitrit wird sodann durch Zugabe von 10 %iger Amidoschwefelsäure zerstört. In die Suspension des Diazonium-Salzes gibt man anschließend die unter Beispiel 1 hergestellte Lösung der Verbindung der Formel (VIa).
Dann wird der pH-Wert durch Zugabe von 15%iger Natriumcarbonat-Lösung auf 5 bis 6 gestellt und bei 20°C ausgekuppelt.
Nach dem Eindampfen der Lösung erhält man einen Farbstoff der Formel (le) 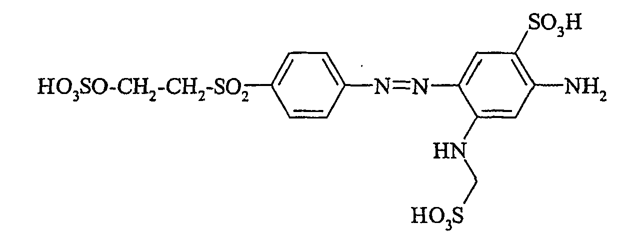 der Baumwolle in rotstichig gelben Tönen mit guten Echtheiten färbt bzw. bedruckt λₘₐₓ = 445 nm.

In analoger Weise werden die Farbstoffe der Beispiele (3) bis (17) erhalten, wenn man Amine R-NH₂ nach der in Beispiel 2 beschriebenen Weise diazotiert und auf die Verbindung (Vla) kuppelt.

| Bsp. | R-NH₂ | Kupplungskomponente | Farbton | λₘₐₓ (nm) |
|---|---|---|---|---|
| 3) | 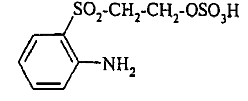 | 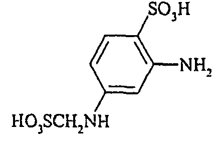 | gelb | 416 |
| 4) | 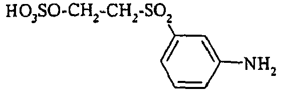 | -"- | gelb | 422 |
| 5) | 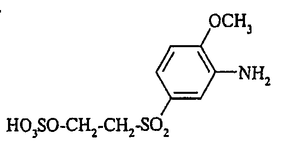 | -"- | gelb | 406 |
| 6) | 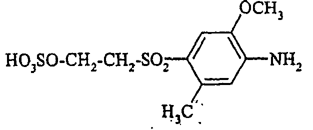 | -"- | gelb | 428 |
| 7) | 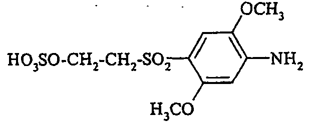 | -"- | gelb | 446 |
| 8) | 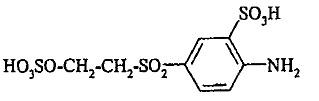 | -"- | gelb | 412 |
| 9) | 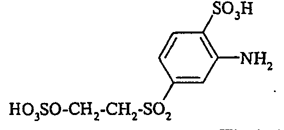 | -"- | gelb | 409 |
| 10) | 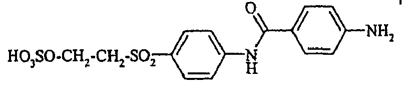 | -"- | gelb | 407 |
| 11) | 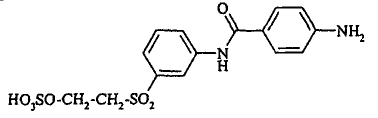 | -"- | gelb | 404 |
| 12) | 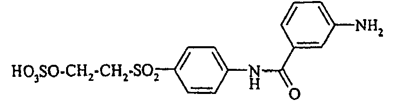 | -"- | gelb | 408 |
| 13) | 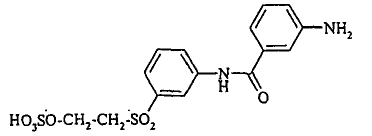 | -"- | gelb | 405 |
| 14) | 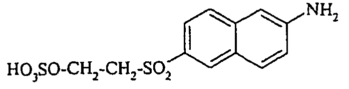 | -"- | gelb | 436 |
| 15) | 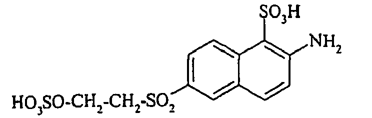 | -"- | gelb | 438 |
| 16) | 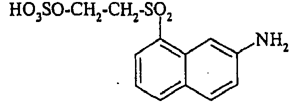 | -"- | gelb | 429 |
| 17) | 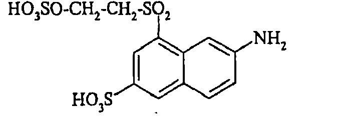 | -"- | gelb | 430 |

### Beispiel 18

18.8 Teile 2,4-Diaminobenzolsulfonsäure werden in 150 Teilen Wasser suspendiert und durch Zugabe von Lithiumhydroxid-Lösung neutral gelöst. Man kühlt auf 10°C ab und tropft in einer Stunde 17.4 Teile 2,4,6-Trifluor-pyrimidin zu, wobei mit 15% iger Sodalösung ein pH-Wert von 5.5 gehalten wird. Nach beendeter Zugabe lässt man auf 20° bis 25 °C aufwärmen und rührt noch eine Stunde nach. Anschliessend wird filtriert und mit 6.9 Teilen Natriumnitrit versetzt.
Das Filtrat kühlt man durch Einwerfen von Eis auf 10°C ab und tropft es in 30 Minuten auf eine Vorlage von 100 Teilen Eis und 60 Teilen konz. Salzsäure (31 %). Man rührt 1 Stunde nach und zerstört den Nitrit-Überschuss durch Zugabe von Amidoschwefelsäure.
In die saure Diazotierung tropft man anschließend die in Beispiel 1 beschriebene Lösung der Verbindung (VIa) und stellt anschließend den pH-Wert durch Zugabe von 15%iger Sodalösung auf 5.0 bis 5.5 ein.
Die erhaltene Lösung wird eingedampft. Man erhält eine Farbstoff der Formel, 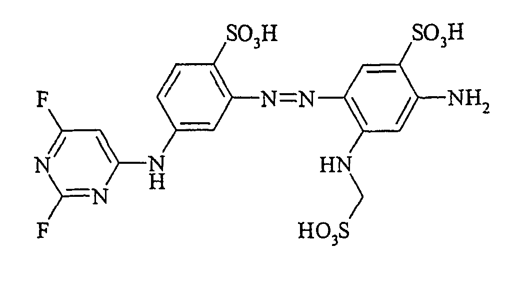 der Baumwolle in gelben Tönen (λₘₐₓ = 406 nm) mit guten Echtheiten färbt bzw. bedruckt.

In analoger Weise werden die Farbstoffe der Beispiele (19) bis (32) erhalten, wenn man die in der nachfolgenden Tabelle angegebene Aminoverbindungen R-NH₂ nach der in Beispiel 18 angegebenen Weise diazotiert und kuppelt.

| Bsp. | R=NH₂ | Kupplungskomponen1 | Farbton | λₘₐₓ (nm) |
|---|---|---|---|---|
| 19) | 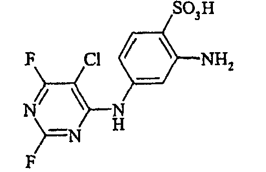 | 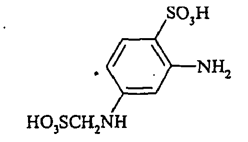 | gelb | 417 |
| 20) | 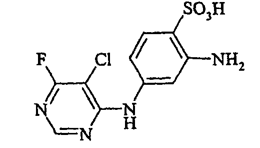 | -"- | gelb | 416 |
| 21) | 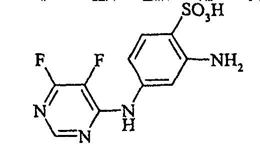 | -"- | gelb | 418 |
| 22) | 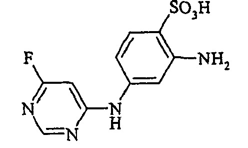 | -"- | gelb | 417 |
| 23) | 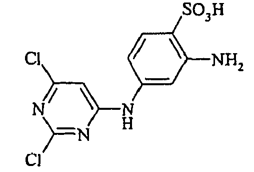 | -"- | gelb | 421 |
| 24) | 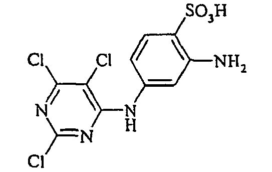 | -"- | gelb | 418 |
| 25) | 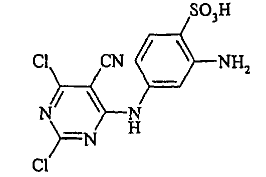 | -"- | gelb | 415 |
| 26) | 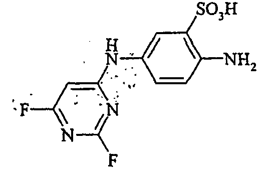 | -"- | gelb | 412 |
| 27) | 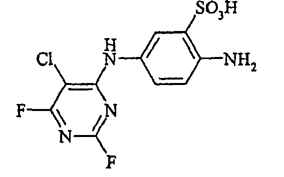 | -"- | gelb | 415 |
| 28) | 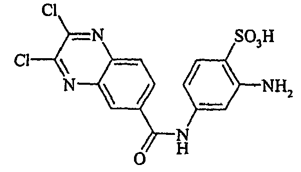 | -"- | gelb | 414 |
| 29) | 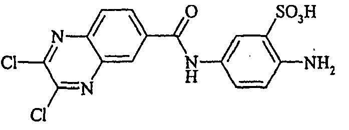 | -"- | gelb | 412 |
| 30) | 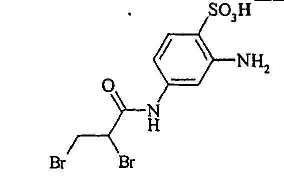 | -"- | gelb | 412 |
| 31) | 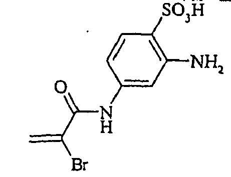 | -"- | gelb | 415 |
| 32) | 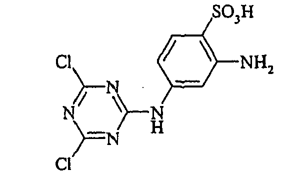 | -"- | "-" gelb | 414 |

### Beispiel 33

Man löst 28.1 Teile 4-(2'-Sulfatoethylsulfonyl)-anilin in 250 Teilen Wasser durch Neutralisation mit festem Natriumhydrogencarbonat. In die Lösung gibt man 4.2 Teile Natriumfluorid und kühlt anschließend durch Zugabe von Eis auf 0° bis 5°C ab.
Man tropft nun innerhalb von 5 Minuten 13.5 Teile Trifluortriazin zu, wobei der pH-Wert zunächst schnell abfällt und sich anschließend bei 4.5 bis 5.0 einpendelt. Nach beendeter Zugabe rührt man weitere 15 Minuten nach. Dann tropft man eine neutralisierte Lösung von 18.8 Teilen 2,4-Diaminobenzolsulfonsäure in Wasser zu und stellt den pH-Wert auf 6.0 bis 6.5 ein. Zur Vervollständigung der Reaktion erwärmt man auf 30° bis 35°C und rührt 60 Minuten nach. Die erhaltene Lösung wird filtriert und mit 6.9 Teilen Natriumnitrit versetzt. Die erhaltene Lösung kühlt man durch Einwerfen von Eis auf 10°C ab und tropft sie in 30 Minuten auf eine Vorlage von 100 Teilen Eis und 60 Teilen konz. Salzsäure (31 %). Man rührt 1 Stunde nach und zerstört den Nitrit-Überschuss durch Zugabe von Amidoschwefelsäure.
In die saure Diazotierung tropft man anschließend die in Beispiel 1 beschriebene Lösung der Verbindung (VIa).
Es stellt sich ein pH-Wert von 2.0 bis 2.5 ein. Nach 1 Stunde Nachrühren wird mit Sodalösung auf pH 5.5 gestellt und anschließend mit NaH₂PO₄/Na₂HPO₄ gepuffert. Die erhaltene Lösung wird eingedampft.
Man erhält einen Farbstoff der Formel 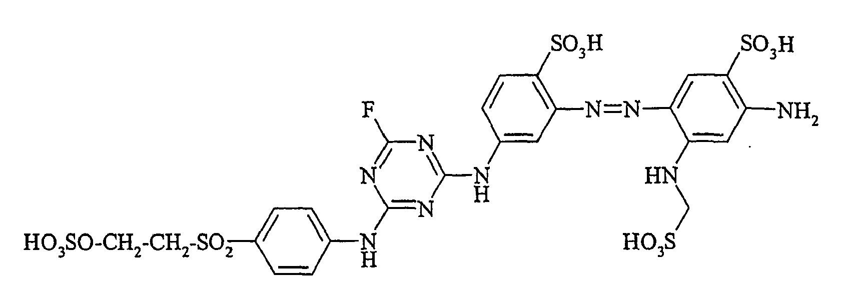 der Baumwolle in gelben Tönen (λₘₐₓ = 408) nm mit guten Echtheiten färbt bzw. bedruckt.

In analoger Weise werden die Farbstoffe der Beispiele (35) bis (47) erhalten, wenn man die in der nachfolgenden Tabelle angegebenen Aminoverbindungen R-NH₂ nach der in Beispiel 31 angegebenen Weise diazotiert und kuppelt.

| Bsp. | R-NH₂ | Kupplungskomponente | Farbton | λₘₐₓ (nm) |
|---|---|---|---|---|
| 34) | 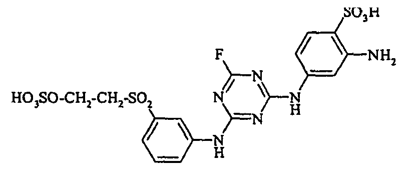 | 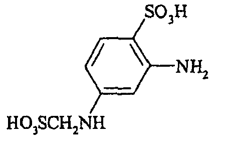 | gelb | 416 |
| 35) | 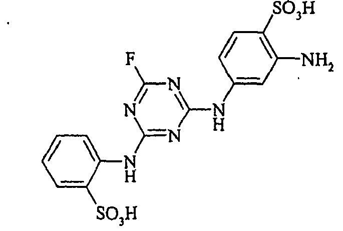 | -"- | gelb | 414 |
| 36) | 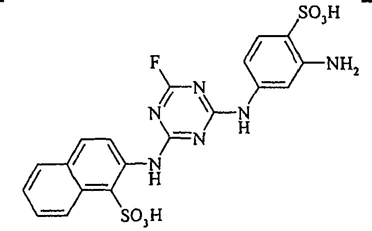 | -"- | gelb | 419 |
| 37) | 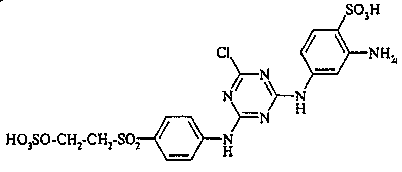 | -"- | gelb | 419 |
| 38) | 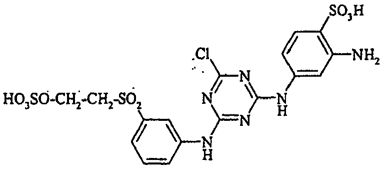 | -"- | gelb | 421 |
| 39) | 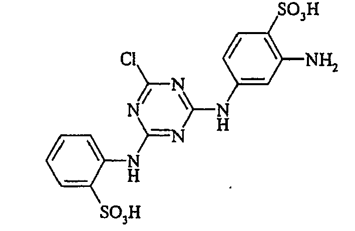 | -"- | gelb | 422 |
| 40) | 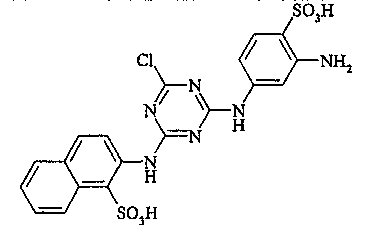 | -"- | gelb | 422 |
| 41) | 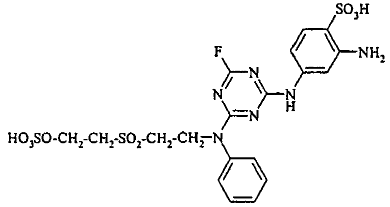 | -"- | gelb | 419 |
| 42) | 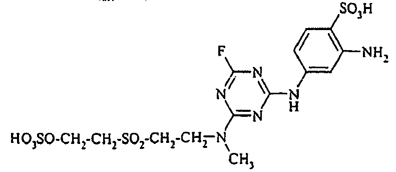 | -"- | gelb | 418 |
| 43) | 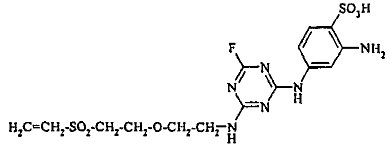 | -"- | gelb | 408 |
| 44) | 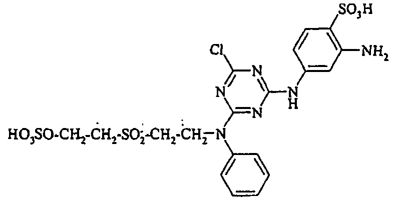 | -"- | gelb | 409 |
| 45) | 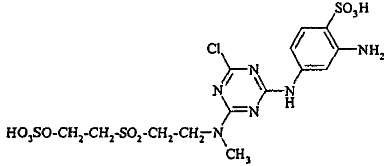 | -"- | gelb | 407 |
| 46) | 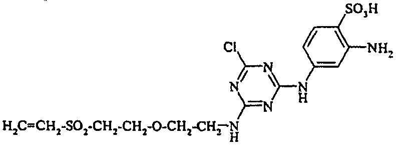 | -"- | gelb | 409 |
| 47) | 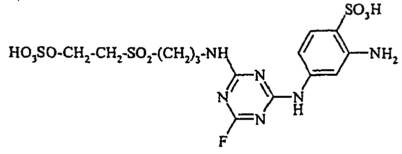 | -"- | gelb | 411 |

### Beispiel 48

In eine Suspension von 33.7 g 4-(2'-Sulfatoethylsulfonyl)-anilin in 250 Teilen Wasser trägt man bei 15°C nacheinander 0.5 g eines handelsüblichen Dispergiermittels und 25 Teile 31 %iger Salzsäure ein und rührt 15 Minuten nach. Anschließend tropft man 16 Teile einer 40%igen Natriumnitrit-Lösung in Wasser zu und rührt bei Überschuß Nitrit 60 Minuten nach.
Überschüssiges Nitrit wird sodann durch Zugabe von 10%iger Amidoschwefelsäure zerstört. In die Suspension des Diazonium-Salzes gibt man anschließend die unter Beispiel 2 beschriebene Farbstofflösung und rührt 15 Minuten nach.

Dann stellt man den pH-Wert durch Zugabe von 1 5%iger Sodalösung auf 5.0 bis 5.5 ein und kuppelt aus.
Die erhaltene Lösung wird eingedampft. Man erhält einen Farbstoff der Formel, 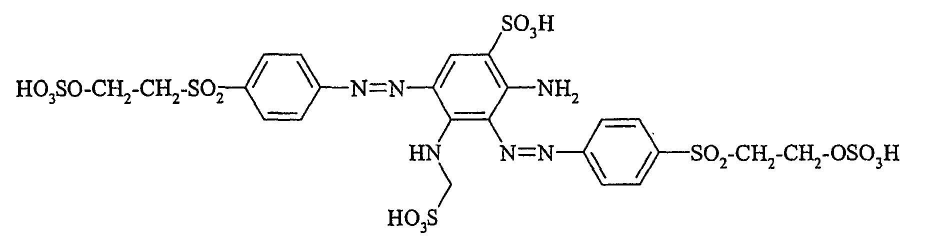 der Baumwolle in einem trüben Orange färbt bzw. bedruckt (λₘₐₓ = 428 nm).

Die in nachfolgender Tabelle aufgeführten Farbstoffe der allgemeinen Formel 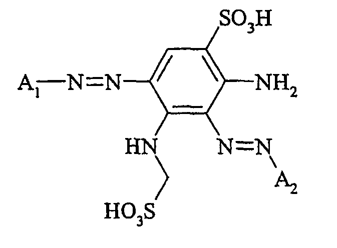 werden erhalten, wenn man die gemäß Beispiel 1 hergestellte Verbindung zuerst wie in Beispiel 2 beschrieben mit einem Amin A₁-NH₂ und anschließend wie in Beispiel 48 beschrieben mit einem Amin A₂-NH₂ umsetzt

| Bsp. | A₁-NH₂ | A₂-NH₂ | Farbton |
|---|---|---|---|
| 49) | 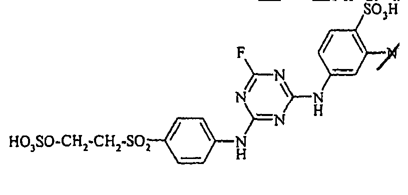 | 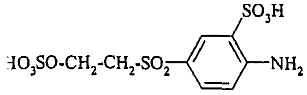 | trüb orange |
| 50) | 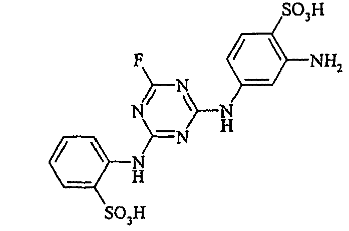 | 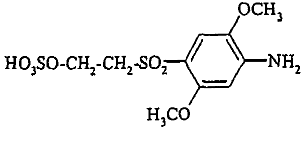 | trüb orange |
| 51) | 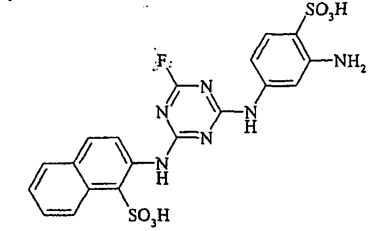 | 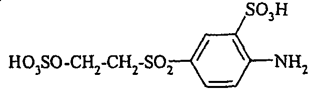 | trüb orange |
| 52) | 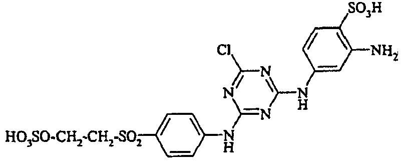 | 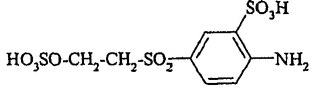 | trüb orange |
| 53) | 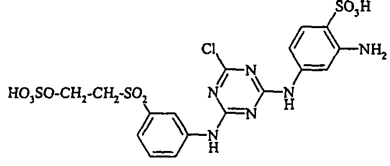 | 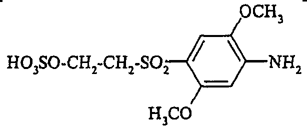 | trüb orange |
| 54) | 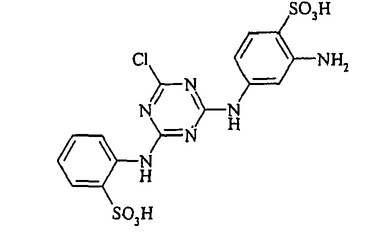 | 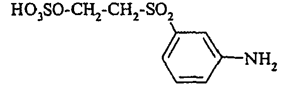 | trüb orange |
| 55) | 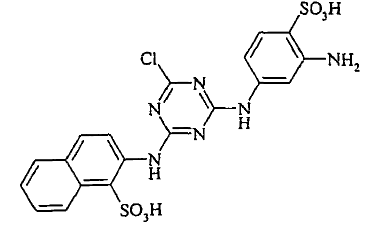 | 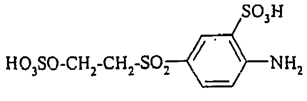 | trüb orange |
| 56) | 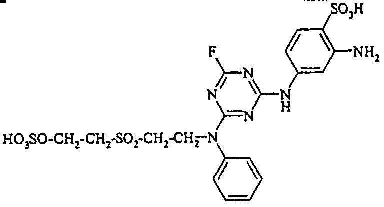 | 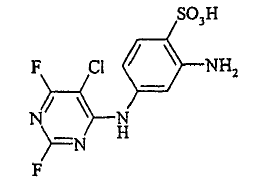 | trüb orange |
| 57) | 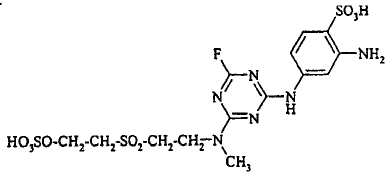 | 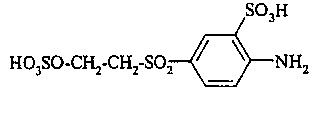 | trüb orange |
| 58) | 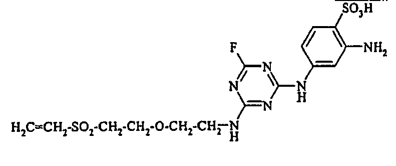 | 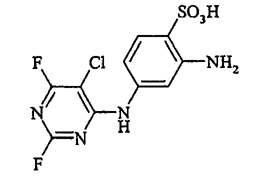 | trüb orange |
| 59) | 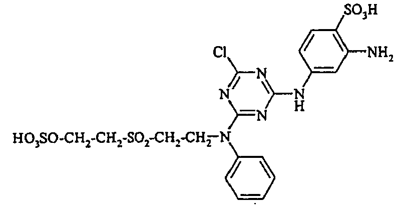 | 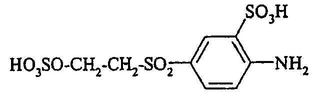 | trüb orange |
| 60) | 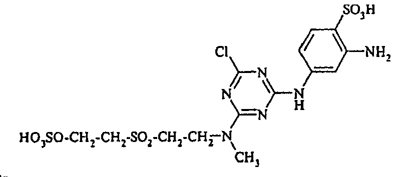 | 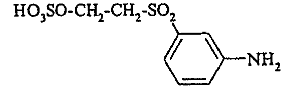 | trüb orange |
| 61) | 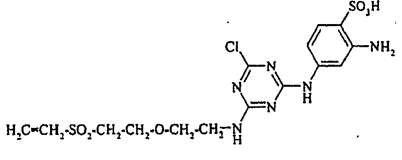 | 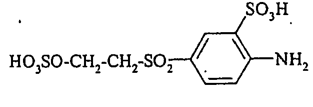 | trüb orange |
| 62) | 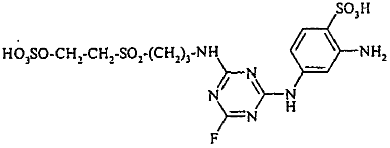 | 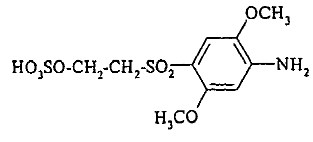 | trüb orange |
| 63) | 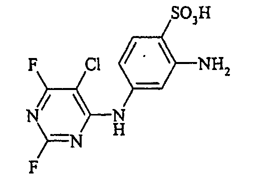 | 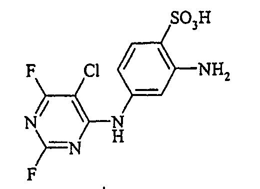 | trüb orange |
| 64) | 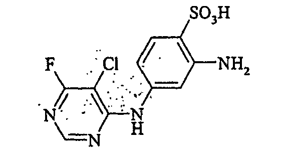 | 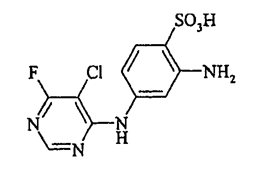 | trüb orange |
| 65) | 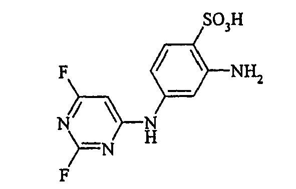 | 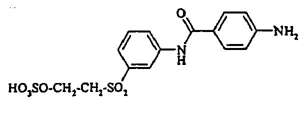 | trüb orange |
| 66) | 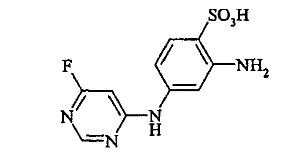 | 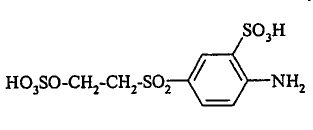 | trüb orange |
| 67) | 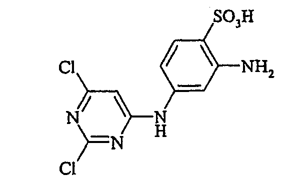 | 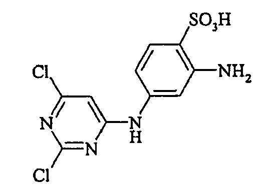 | trüb orange |
| 68) | 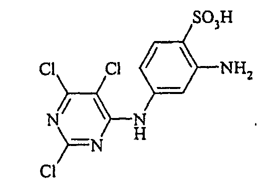 | 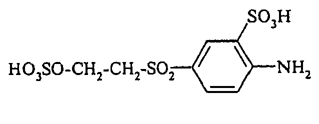 | trüb orange |
| 69) | 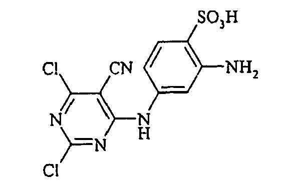 | 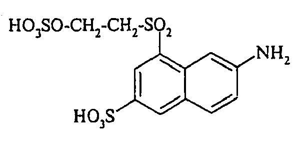 | trüb orange |
| 70) | 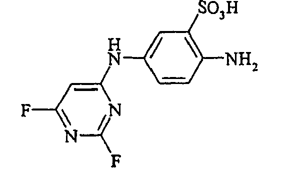 | 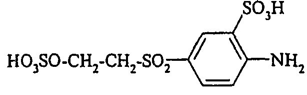 | trüb orange |
| 71) | 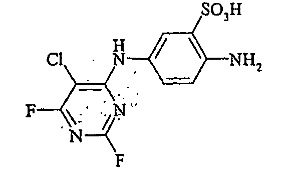 | 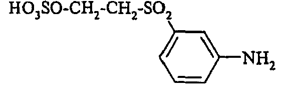 | trüb orange |
| 72) | 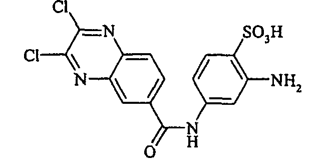 | 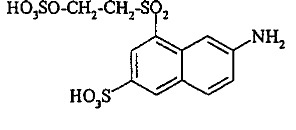 | trüb orange |
| 73) | 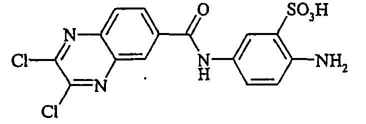 | 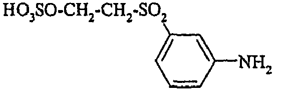 | trüb orange |
| 74) | 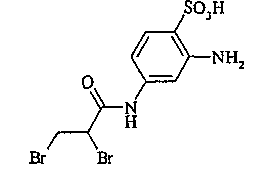 | 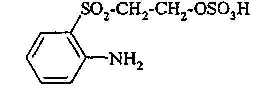 | trüb orange |
| 75) | 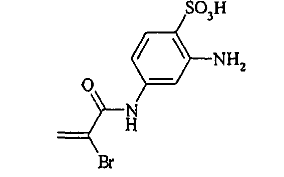 | 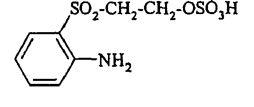 | trüb orange |
| 76) | 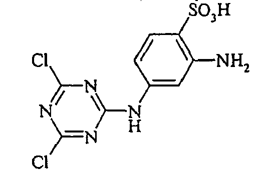 | 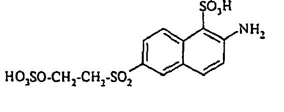 | trüb orange |
| 77) | 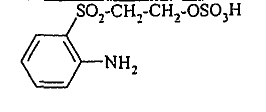 | 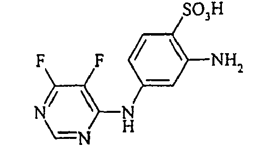 | trüb orange |
| 78) | 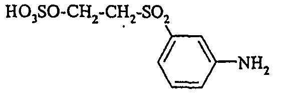 | 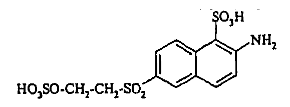 | trüb orange |
| 79) | 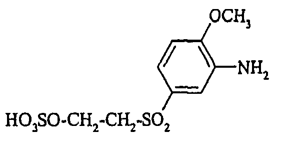 | 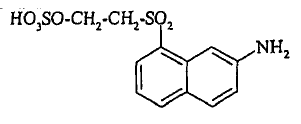 | trüb orange |
| 80) | 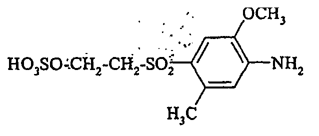 | 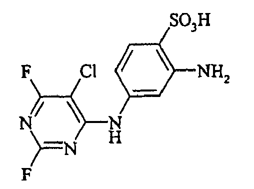 | trüb orange |
| 81) | 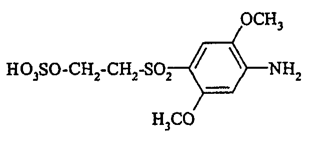 | 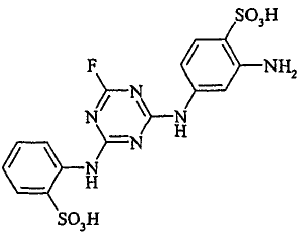 | trüb orange |
| 82) | 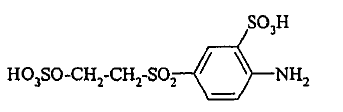 | 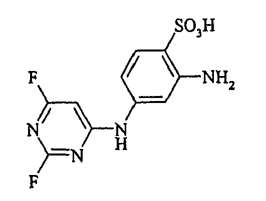 | trüb orange |
| 83) | 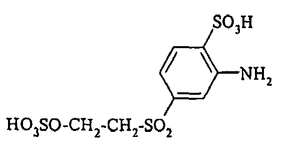 | 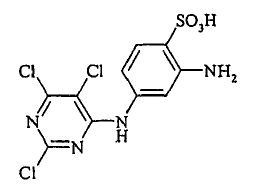 | trüb orange |
| 84) | 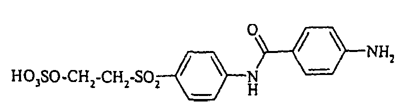 | 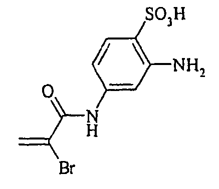 | trüb orange |
| 85) | 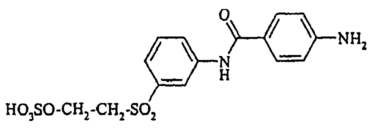 | 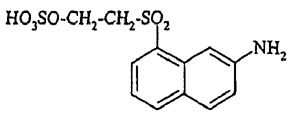 | trüb orange |
| 86) | 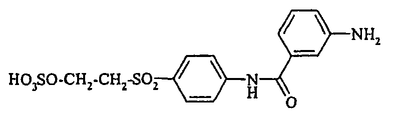 | 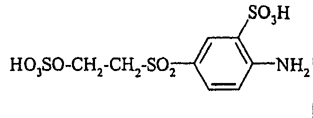 | trüb orange |
| 87) | 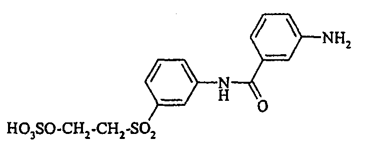 | 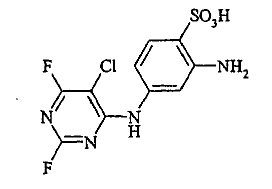 | trüb orange |
| 88) | 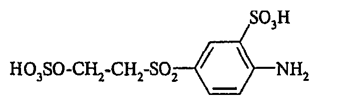 | 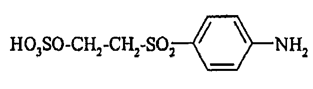 | trüb orange |
| 89) | 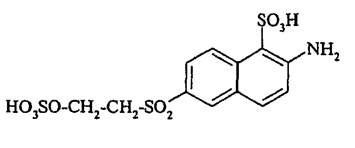 | 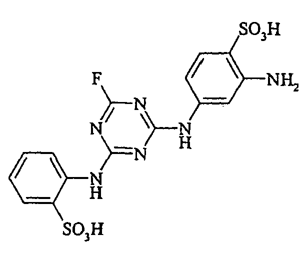 | trüb orange |
| 90) | 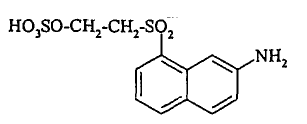 | 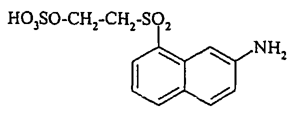 | trüb orange |
| 91) | 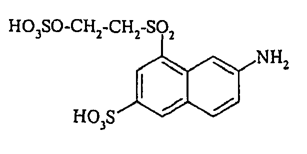 | 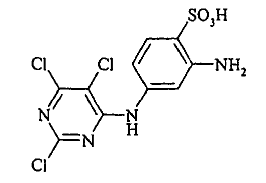 | trüb orange |

### Beispiel 92

17.3 Teile Anilin-4-sulfonsäure werden in 200 Teilen Wasser gelöst und durch Zugabe von 21 Teilen Salzsäure 31 %ig angesäuert. Man kühlt mit Eis auf 10° bis 15°C ab und tropft anschließend 13.2 Teile 40%ige Natriumnitritlösung zu. Bei Nitritüberschuß wird 60 Minuten nachgerührt. Danach wird der Überschuß durch Zusatz von wenigen Tropfen 10%iger Amidoschwefelsäure-Lösung zurückgenommen.
In die Suspension des Diazonium-Salzes gibt man nun die gemäß Beispiel 1 erhaltene Lösung, stellt anschließend den pH-Wert durch Zugabe von 15%iger Sodalösung auf 4 bis 5 ein und kuppelt aus.
Man erhält die Lösung eines Farbstoffes der Formel. 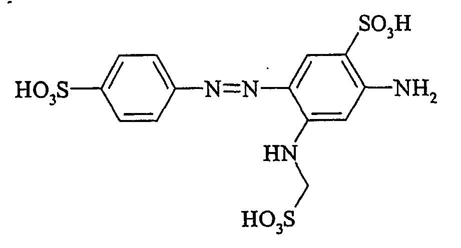 In eine Suspension von 33.7 g 4-(2'-Sulfatoethylsulfonyl)-anilin in 250 Teilen Wasser trägt man bei 15°C nacheinander 0.5 g eines handelsüblichen Dispergiermittels und 25 Teile 31 %iger Salzsäure ein und rührt 15 Minuten nach. Anschließend tropft man 16 Teile einer 40%igen Natriumnitrit-Lösung in Wasser zu und rührt bei Überschuß Nitrit 60 Minuten nach.
Überschüssiges Nitrit wird sodann durch Zugabe von 10%iger Amidoschwefelsäure zerstört. In die Suspension des Diazonium-Salzes gibt man anschließend die obige Farbstofflösung und rührt 15 Minuten nach. Dann stellt man den pH-Wert durch Zugabe von 1 5%iger Sodalösung auf 5.0 bis 5.5 ein und kuppelt aus.
Die erhaltene Lösung wird eingedampft. Man erhält einen Farbstoff der Formel, 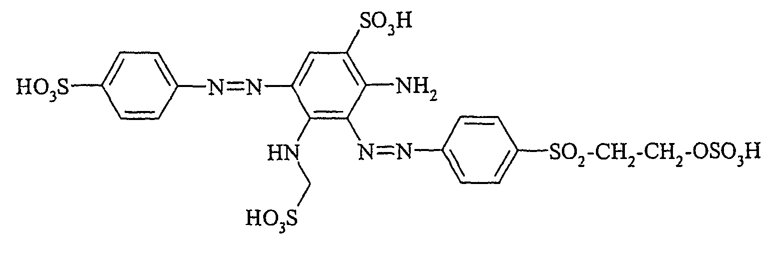 der Baumwolle in gelbstichig braunen Tönen (λₘₐₓ = 431 nm) färbt bzw. bedruckt.

### Beispiele 93 bis 135

Trüb orange Farbstoffe der Formel 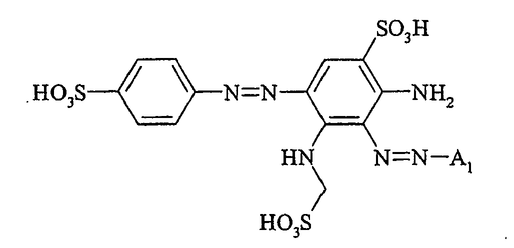 erhält man analog der in Beispiel 92 beschriebenen Vorgehensweise, wenn man statt 4-(2'-Sulfatoethyl-sulfonyl)-anilin ein reaktives Amin A₁-NH₂ entsprechend der Beispiele 49 bis 91 diazotiert und in zweiter Stufe kuppelt.

### Beispiel 136

19.1 Teile Anilin-4-sulfonsäure werden in 220 Teilen Wasser gelöst und durch Zugabe von 23 Teilen Salzsäure 31 %ig angesäuert. Man kühlt mit Eis auf 10° bis 15°C ab und tropft anschließend 14.5 Teile 40%ige Natriumnitritlösung zu. Bei Nitritüberschuß wird 60 Minuten nachgerührt. Danach wird der Überschuß durch Zusatz von wenigen Tropfen 10%iger Amidoschwefelsäure-Lösung zurückgenommen.
In die Suspension des Diazonium-Salzes gibt man nun die unter Beispiel 2 beschriebene Farbstofflösung, stellt anschließend den pH-Wert durch Zugabe von 15 %iger Sodalösung auf 4 bis 5 ein und kuppelt aus.
Die erhaltene Lösung wird durch Eindampfen getrocknet. Man erhält den Farbstoff der Formel 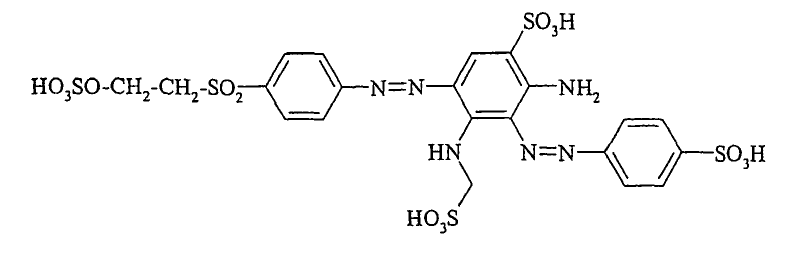 der Baumwolle in orange-braunen Tönen (λₘₐₓ = 435 nm) färbt bzw. bedruckt

### Beispiele 137 bis 181

Trüb orange Farbstoffe der Formel 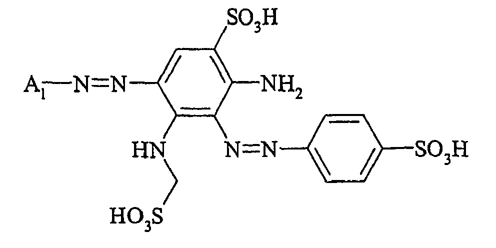 erhält man analog der in Beispiel 136 beschriebenen Vorgehensweise, wenn man statt der in Beispiel 2 beschriebenen Farbstofflösung eine Lösung eines Farbstoffes gemäß Beispielen 3 bis 47 einsetzt.

### Beispiel 182

30.3 Teile 2-Naphthylamin-4,8-disulfonsäure werden in 300 Teilen Wasser gelöst und durch Zugabe von 21 Teilen Salzsäure 31 %ig angesäuert. Man kühlt mit Eis auf 10° bis 15 °C ab und tropft anschließend 13.2 Teile 40%ige Natriumnitritlösung zu. Bei Nitritüberschuß wird 60 Minuten nachgerührt. Danach wird der Überschuß durch Zusatz von wenigen Tropfen 10%iger Amidoschwefelsäure-Lösung zurückgenommen.
In die Suspension des Diazonium-Salzes gibt man nun die gemäß Beispiel 1 erhaltene Lösung, stellt anschließend den pH-Wert durch Zugabe von 15%iger Sodalösung auf 4 bis 5 ein und kuppelt aus.
Man erhält die Lösung eines Farbstoffes der Formel. 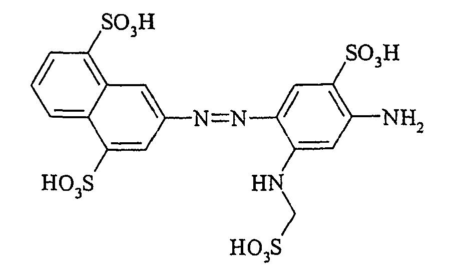 In eine Suspension von 33.7 g 4-(2'-Sulfatoethylsulfonyl)-anilin in 250 Teilen Wasser trägt man bei 15°C nacheinander Q5 g eines handelsüblichen Dispergiermittels und 25 Teile 31 %iger Salzsäure ein und rührt 15 Minuten nach. Anschließend tropft man 16 Teile einer 40%igen Natriumnitrit-Lösung in Wasser zu und rührt bei Überschuß Nitrit 60 Minuten nach.
Überschüssiges Nitrit wird sodann durch Zugabe von 10%iger Amidoschwefelsäure zerstört. In die Suspension des Diazonium-Salzes gibt man anschließend die obige Farbstofflösung und rührt 15 Minuten nach. Dann stellt man den pH-Wert durch Zugabe von 15 %iger Sodalösung auf 5.0 bis 5.5 ein und kuppelt aus.
Die erhaltene Lösung wird eingedampft. Man erhält einen Farbstoff der Formel, 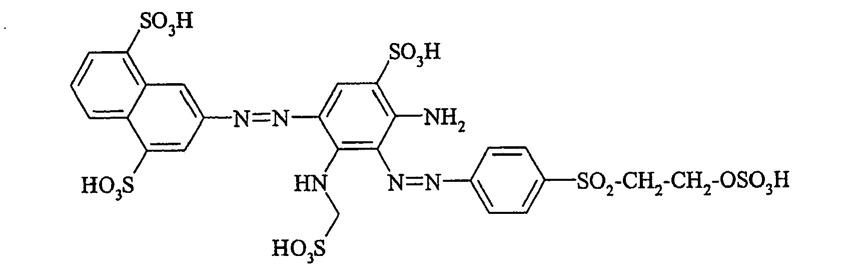 der Baumwolle in gelbstichig braunen Tönen (λₘₐₓ = 439 nm) färbt bzw. bedruckt.

### Beispiele 183 bis 225

Trüb orange Farbstoffe der Formel 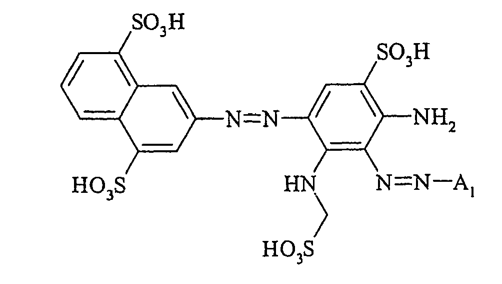 erhält man analog der in Beispiel 182 beschriebenen Vorgehensweise, wenn man statt 4-(2'-Sulfatoethyl-sulfonyl)-anilin ein reaktives Amin A₁-NH₂ entsprechend der Beispiele 49 bis 91 diazotiert und in zweiter Stufe kuppelt.

### Beispiel 226

33.3 Teile 2-Naphthylamin-4,8-disulfonsäure werden in 350 Teilen Wasser gelöst und durch Zugabe von 25 Teilen Salzsäure 31 %ig angesäuert. Man kühlt mit Eis auf 10° bis 15 °C ab und tropft anschließend 14.5 Teile 40%ige Natriumnitritlösung zu. Bei Nitritüberschuß wird 60 Minuten nachgerührt. Danach wird der Überschuß durch Zusatz von wenigen Tropfen 10%iger Amidoschwefelsäure-Lösung zurückgenommen.
In die Suspension des Diazonium-Salzes gibt man nun die unter Beispiel 2 beschriebene Farbstofflösung, stellt anschließend den pH-Wert durch Zugabe von 15%iger Sodalösung auf 4 bis 5 ein und kuppelt aus.
Die erhaltene Lösung wird durch Eindampfen getrocknet. Man erhält den Farbstoff der Formel 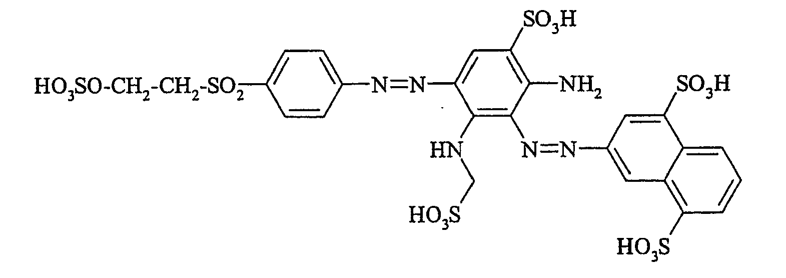 der Baumwolle in gelb bis orange-braunen Tönen (λₘₐₓ = 429 nm) färbt bzw. bedruckt.

### Beispiele 227 bis 271

Trüb orange Farbstoffe der Formel 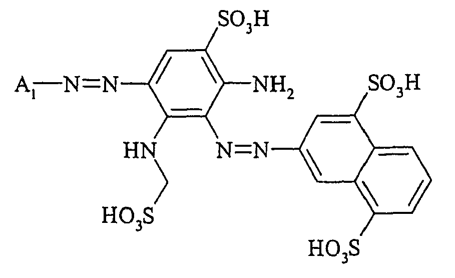 erhält man analog der in Beispiel 226 beschriebenen Vorgehensweise, wenn man statt der in Beispiel 2 beschriebenen Farbstofflösung eine Lösung eines Farbstoffes gemäß Beispielen 3 bis 47 einsetzt.

### Beispiel 272

In eine Suspension von 61.8 g 4-(2'-Sulfatoethylsulfonyl)-anilin in 500 Teilen Wasser trägt man bei 15°C nacheinander Q5 g eines handelsüblichen Dispergiermittels und 50 Teile 31 %iger Salzsäure ein und rührt 15 Minuten nach. Anschließend tropft man 32 Teile einer 40%igen Natriumnitrit-Lösung in Wasser zu und rührt bei Überschuß Nitrit 60 Minuten nach.
Überschüssiges Nitrit wird sodann durch Zugabe von 10%iger Amidoschwefelsäure zerstört. In die Suspension des Diazonium-Salzes gibt man anschließend die gemäß Beispiel 1 erhaltene Lösung und rührt 15 Minuten nach. Dann stellt man den pH-Wert durch Zugabe von 1 5%iger Sodalösung auf 5.0 bis 5.5 ein und kuppelt aus.
Die erhaltene Lösung wird eingedampft. Man erhält den Farbstoff der Formel, 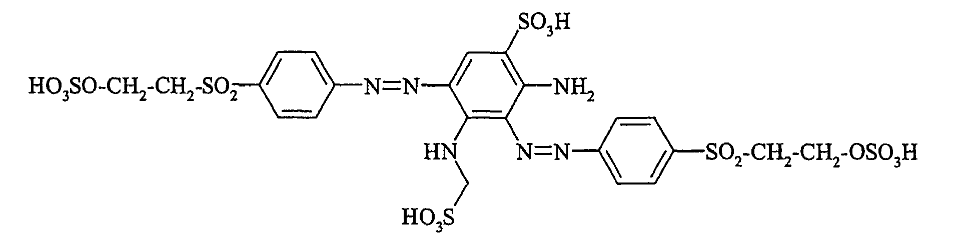 der Baumwolle in einem trüben Trüb orange bis Orange (λₘₐₓ = 428 nm) färbt bzw. bedruckt.

### Beispiele 273 bis 317

Trüb orange Farbstoffe der Formel 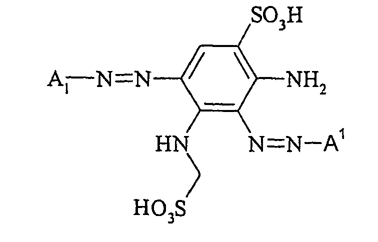 erhält man analog der in Beispiel 272 bechriebenen Vorgehensweise, wenn man statt 4-(2'-Sulfatoethyl-sulfonyl)-anilin 2.2 Äquivalente eines reaktiven Amines A₁-NH₂ entsprechend der Beispiele 49 bis 91 diazotiert und mit einem Äquivalent des Kupplers aus Beispiel 1 zur Reaktion bringt.

## Patentansprüche

1. Farbstoffe der allgemeinen Formel (I) 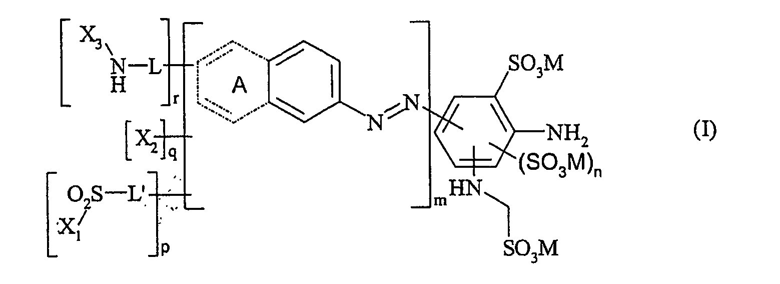 worin
m 1 oder 2,
n 0 oder 1,
q 0, 1, 2 oder 3 und
p 0, 1 oder 2,
r 0, 1 oder 2 bedeuten, wobei
p + r gleich 1 oder 2 ist und
X₁ für einen Rest -CH₂CH₂Z oder -CH=CH₂ steht,worin Z für eine Gruppierung steht, die durch Einwirkung von Alkali eliminiert werden kann,
M Wasserstoff, Ammonium, ein Alkalimetall oder das Äquivalent eines Erdalkalimetalls,
X₂ Alkyl, Alkoxy, Halogen, COOM oder SO₃M,
L eine direkte Bindung oder Alkylen,
L' eine direkte Bindung oder eine Gruppe der Formel 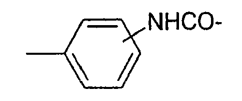
X₃ eine heterocyclische Reaktivgruppe der allgemeinen Formel (IIa) oder (IIb) 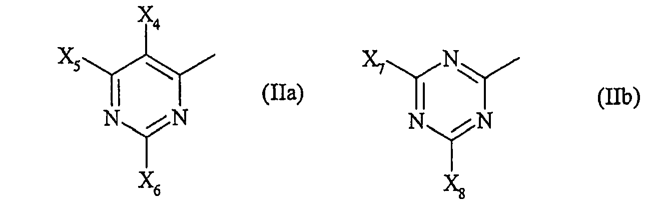 oder eine Reaktivgruppe der Formel (llc), (lld) oder (lle) 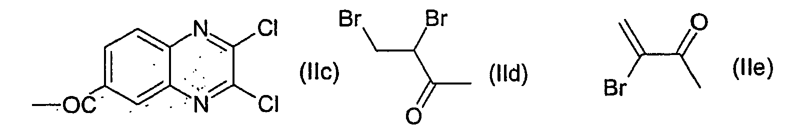
bedeuten, worin
X₄ bis X₆ unabhängig voneinander Wasserstoff oder Halogen bedeuten, mit der Maßgabe, dass wenigstens ein Rest X₄ bis X₆ Halogen ist,
X₇ Halogen oder X₈ bedeutet und
X₈ für einen Substituenten der allgemeinen Formel (III) steht 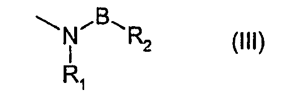 worin
R₁ für Wasserstoff, Alkyl oder Aryl,
B für Alkylen, durch ein Sauerstoffatom unterbrochenes Alkylen, Arylen oder Arylalkylen und
R₂ für einen Rest SO₃M, SO₂-CH₂CH₂Z oder SO₂-CH = CH₂ steht, worin Z wie oben angegeben definiert ist und wobei
der mit A gekennzeichnete Ring entweder abwesend oder anwesend ist.

2. Farbstoff gemäß Anspruch 1, **dadurch gekennzeichnet, daß** X₂ (C₁-C₄)-Alkyl, (C₁-C₄)-Alkoxy oder SO₃M bedeutet, wobei M wie in Anspruch 1 angegeben definiert ist.

3. Farbstoff gemäß Anspruch 1 und/oder 2, **dadurch gekennzeichnet, daß** X₃ für eine Gruppe der Formel 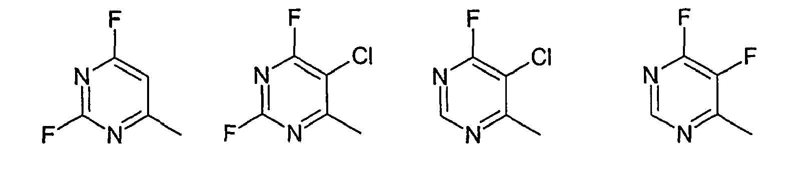 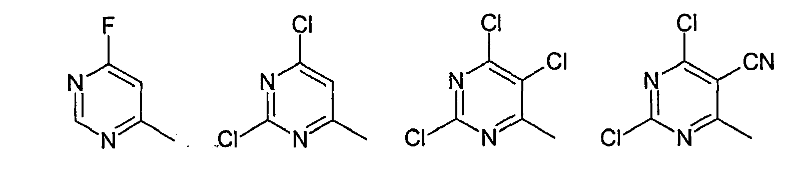 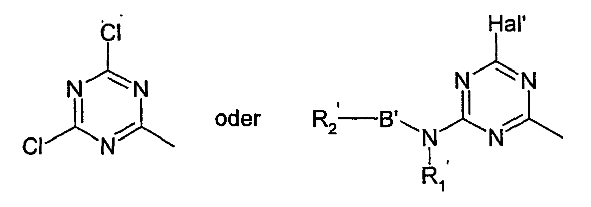 steht, wobei
Hal' für Chlor oder Brom,
R₁' für Wasserstoff, Methyl, Ethyl oder Phenyl,
B' für Ethylen, Propylen oder - CH₂CH₂-O-CH₂CH₂- und
R₂' für - SO₂CH₂CH₂OSO₃M oder -SO₂CH = CH₂ steht.

4. Farbstoff gemäß einem oder mehreren der Ansprüche 1 bis 3, **dadurch gekennzeichnet, daß** m=1 1 ist.

5. Farbstoff gemäß einem oder mehreren der Ansprüche 1 bis 3, **dadurch gekennzeichnet, daß** m=2 ist.

6. Farbstoff gemäß einem oder mehreren der Ansprüche 1 bis 5, **dadurch gekennzeichnet, daß** er der allgemeinen Formel (la) 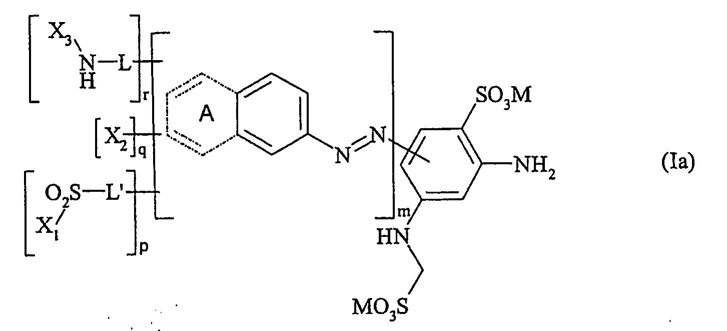 entspricht, worin X₁ bis X₃, A, L, L', M, m, r, p und q wie in Anspruch 1 angegeben definiert sind.

7. Farbstoff gemäß einem oder mehreren der Ansprüche 1 bis 3 oder 4-6, **dadurch gekennzeichnet, daß** er der allgemeinen Formel (Ib) 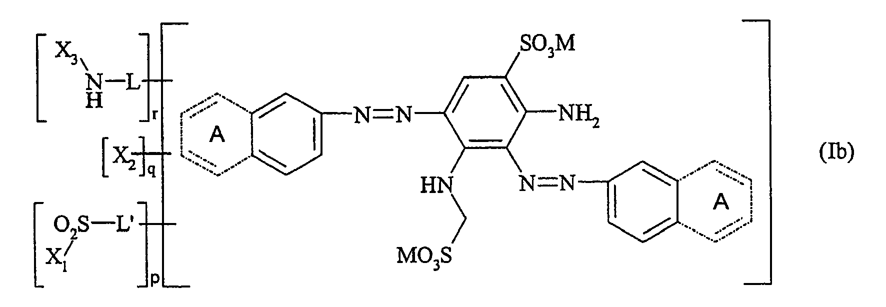 entspricht, worin X₁ bis X₃, A, L, L', M, r, p und q wie oben angegeben definiert sind.

8. Farbstoff gemäß einem oder mehreren der Ansprüche 1 bis 4 oder 6, **dadurch gekennzeichnet, daß** er der allgemeinen Formel (Ic) 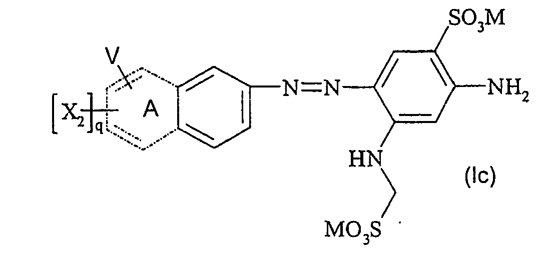 entspricht, worin M, A, X₂ und q wie in Anspruch 1 angegeben definiert sind und V für X₃-NH-L- oder X₁-O₂S-L'- steht, wobei X₁, X₃, L und L' wie in Anspruch 1 angegeben definiert sind.

9. Farbstoff gemäß einem oder mehreren der Ansprüche 1 bis 8, **dadurch gekennzeichnet, daß** er einer allgemeinen Formeln (Id) bis (Iq) 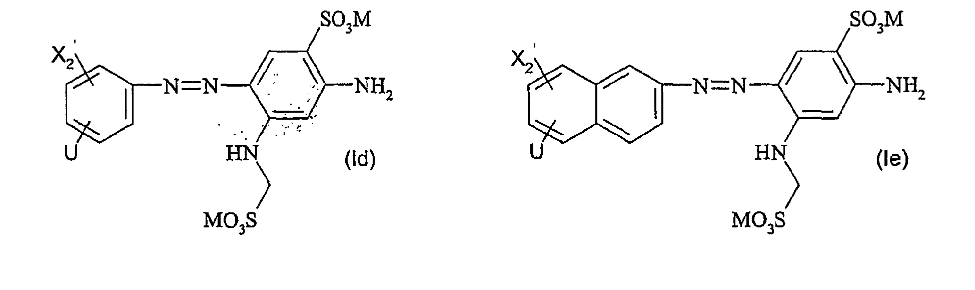 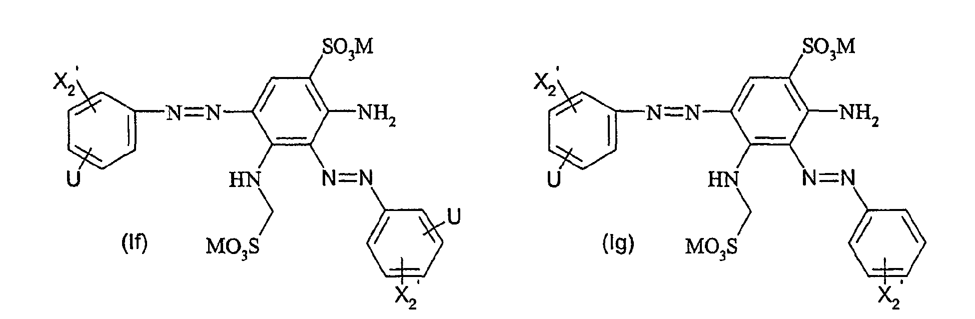 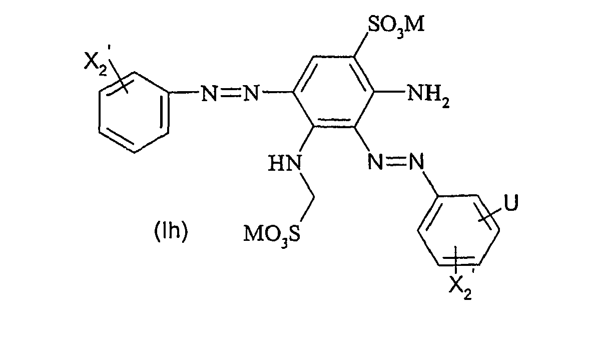 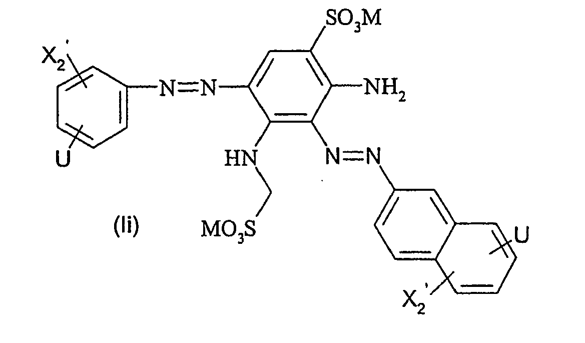 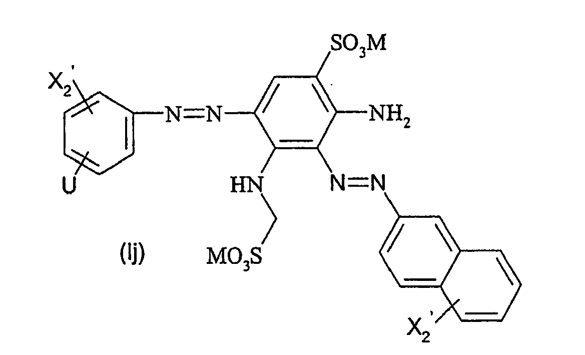 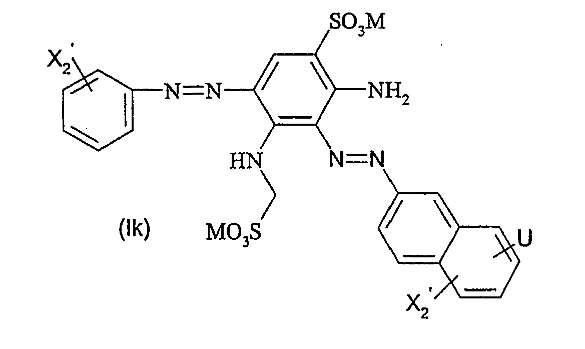 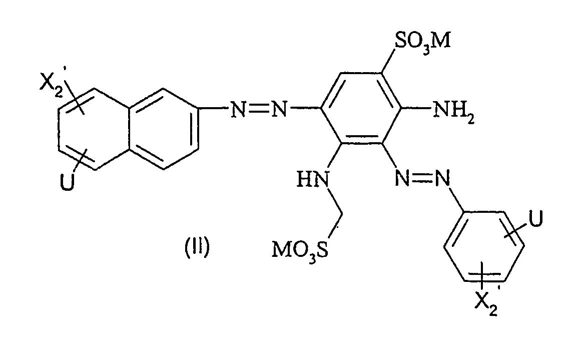 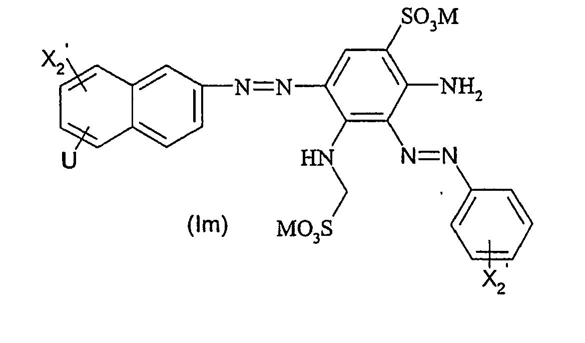 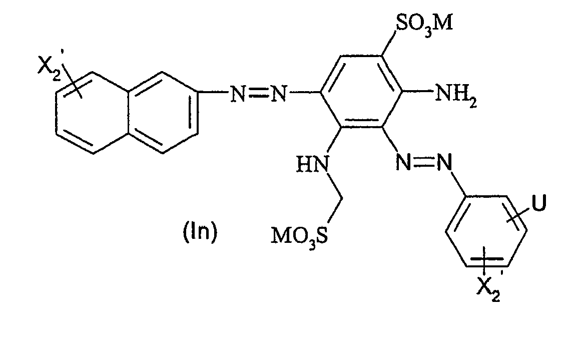 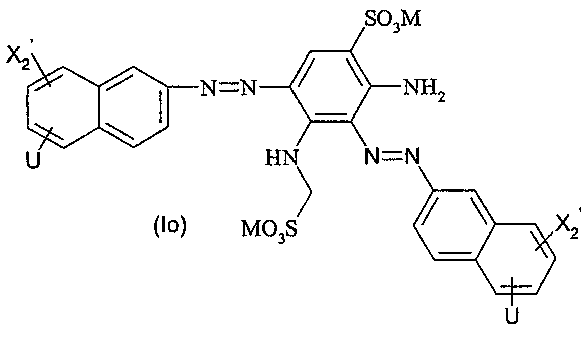 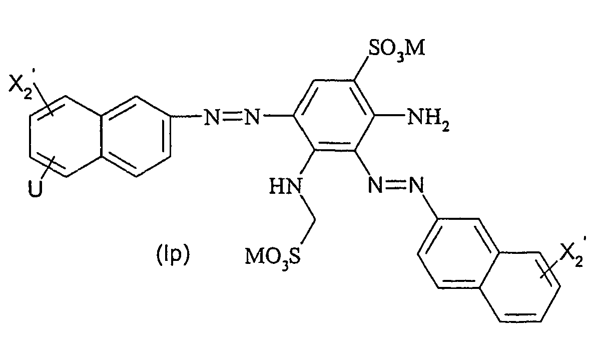 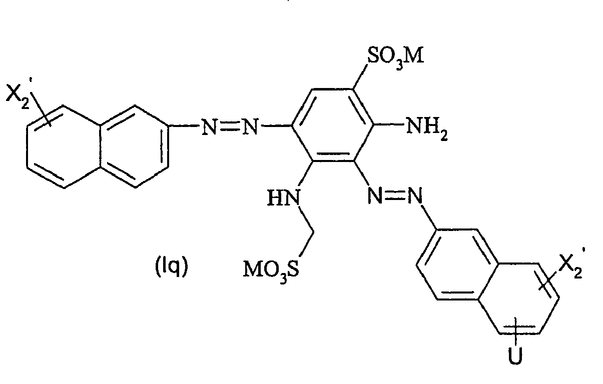 entspricht, worin jeweils
M Wasserstoff oder Natrium und
X₂' Wasserstoff, Methyl, Ethyl, Methoxy, Ethoxy, COOM oder bedeuten und
U für - SO₂CH₂CH₂OSO₃M, -SO₂CH = CH₂ oder - NH-U' steht, Wasserstoff oder Natrium bedeutet und U' eine für eine der 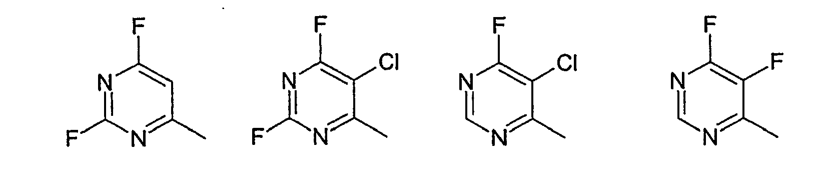 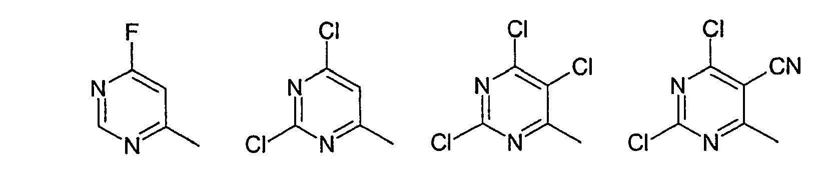 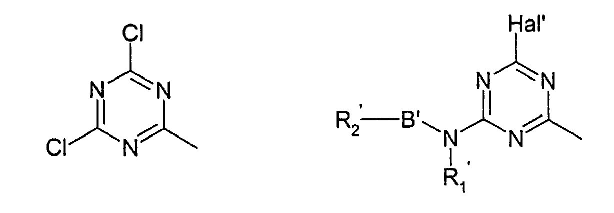 steht, wobei
Hal' für Chlor oder Fluor,
R₁' für Wasserstoff, Methyl, Ethyl oder Phenyl,
B' für Ethylen, Propylen oder - CH₂CH₂-O-CH₂CH₂- und
R₂' für - SO₂CH₂CH₂OSO₃M oder -SO₂CH = CH₂ steht.

10. Verfahren zur Herstellung eines Farbstoffes der allgemeinen Formel (I) gemäß einem oder mehreren der Ansprüche 1 bis 9, **dadurch gekennzeichnet, daß** man ein aromatisches Amin der allgemeinen Formel (V) 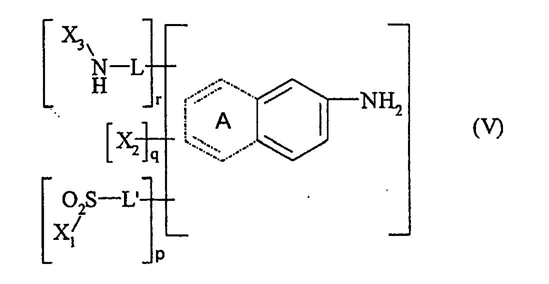 worin p, q, r, L, X₁, X₂ und X₃ wie in Anspruch 1 angegeben definiert sind, diazotiert und auf eine Verbindung der allgemeinen Formel (VI) 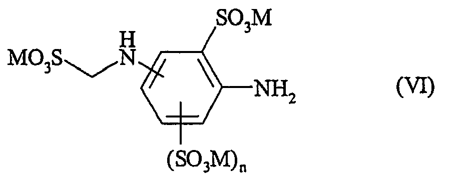 kuppelt.

11. Verwendung eines Farbstoffes der allgemeinen Formel (I) gemäß einem oder mehreren der Ansprüche 1 bis 9 zum Färben und Bedrucken von hydroxy- und/oder carbonamidgruppenhaltigem Material, insbesondere Fasermaterial.

## Claims

1. A dye of the general formula (I) 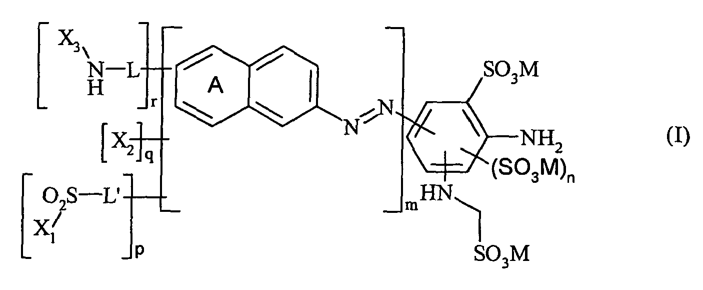 where
m is 1 or 2,
n is 0 or 1,
q is 0, 1, 2 or 3 and
p is 0, 1 or 2,
r is 0, 1 or 2, and
p + r is 1 or 2 and
X₁ is a radical -CH₂CH₂Z or -CH = CH₂, Z being an alkali-eliminable group,
M is hydrogen, ammonium, an alkali metal or the equivalent of an alkaline earth metal,
X₂ is alkyl, alkoxy, halogen, COOM or SO₃M,
L is a direct bond or alkylene,
L' is a direct bond or a group of the formula 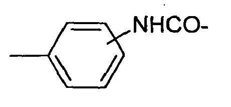
X₃ is a heterocyclic reactive group of the general formula (IIa) or (IIb) 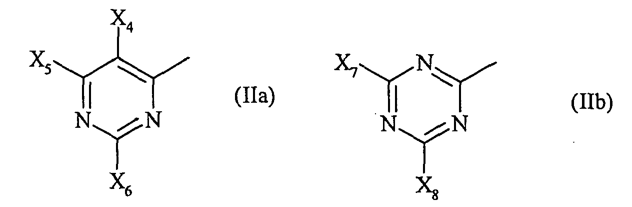 or a reactive group of the formula (IIc), (IId) or (IIe) 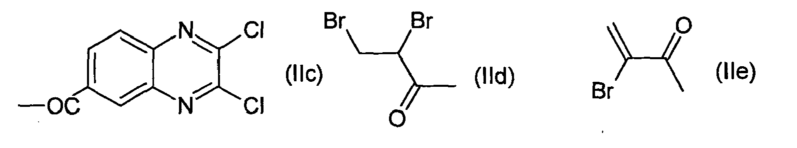
where
X₄ to X₆ independently are hydrogen or halogen, with the proviso that at least one radical X₄ to X₆ is halogen,
X₇ is halogen or X₈, and
X₈ is a substituent of the general formula (III) 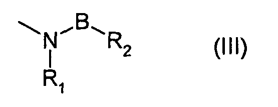 where
R₁ is hydrogen, alkyl or aryl,
B is alkylene, oxygen-interrupted alkylene, arylene or arylalkylene, and
R₂ is a radical SO₃M, SO₂-CH₂CH₂Z or SO₂-CH = CH₂, in which Z is as defined above
and the ring labeled A is either absent or present.

2. A dye as claimed in claim 1, wherein X₂ is C₁-C₄ alkyl, C₁-C₄ alkoxy or SO₃M, M being as defined in claim 1.

3. A dye as claimed in claim 1 and/or 2, wherein X₃ is a group of the formula 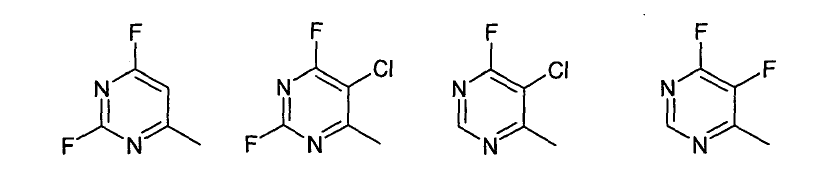 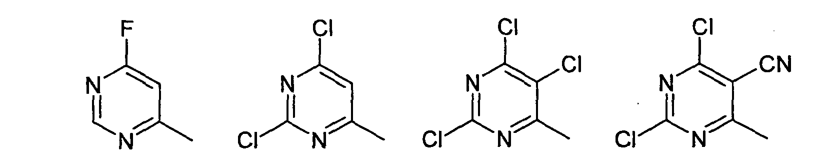 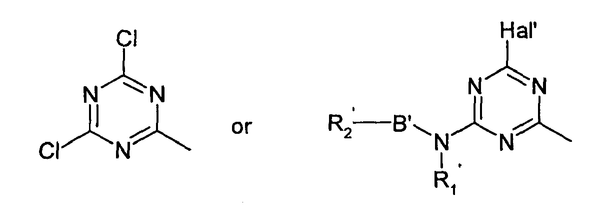 where
Hal' is chloro or bromo,
R₁' is hydrogen, methyl, ethyl or phenyl,
B' is ethylene, propylene or -CH₂CH₂-O-CH₂CH₂- and
R₂' is -SO₂CH₂CH₂OSO₃M or -SO₂CH=CH₂.

4. The dye as claimed in one or more of claims 1 to 3, wherein m is 1.

5. The dye as claimed in one or more of claims 1 to 3, wherein m is 2.

6. The dye as claimed in one or more of claims 1 to 5, corresponding to the general formula (la) 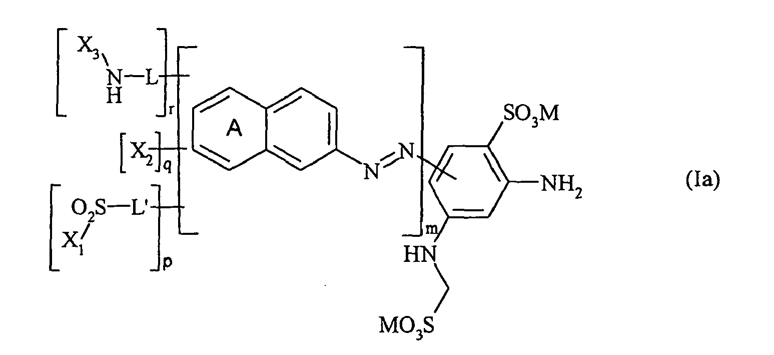 where X₁ to X₃, A, L, L', M, m, r, p and q are as defined in claim 1.

7. The dye as claimed in one or more of claims 1 to 3 and 4-6, corresponding to the general formula (Ib) 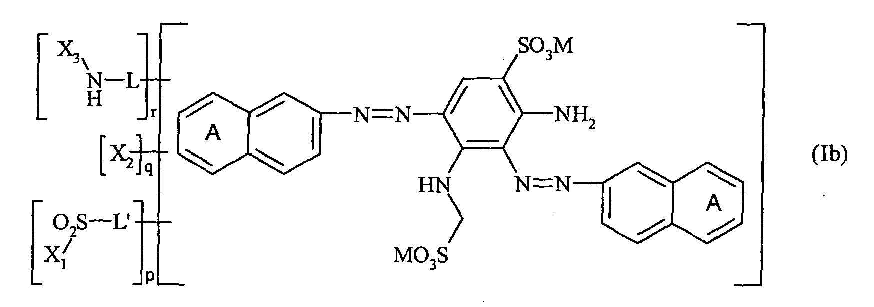 where X₁ to X₃, A, L, L', M, r, p and q are as defined in claim 1.

8. The dye as claimed in one or more of claims 1 to 4 and 6, corresponding to the general formula (Ic) 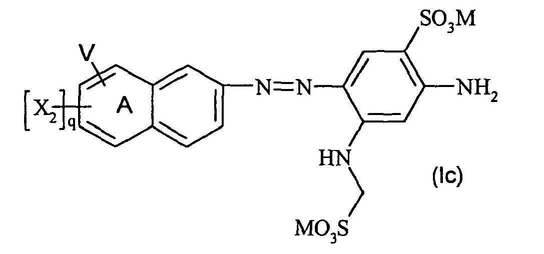 where M, A, X₂ and q are as defined in claim 1 and V is X₃-NH-L- or X₁₋O₂S-L'-, where X₁, X₃, L and L' are as defined in claim 1.

9. The dye as claimed in one or more of claims 1 to 8, corresponding to one of the general formulae (Id) to (lq) 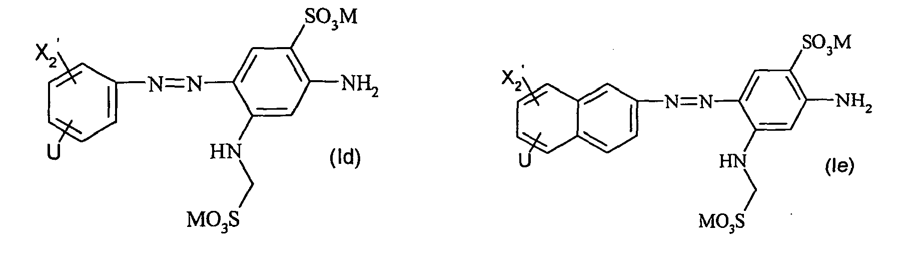 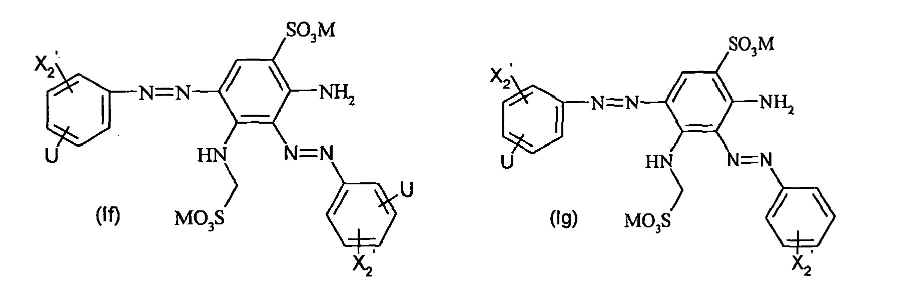 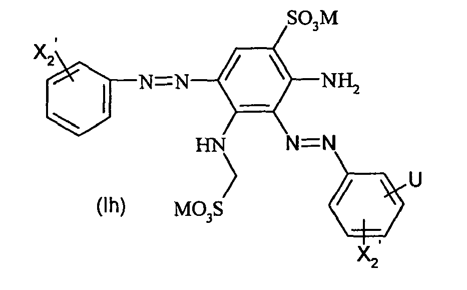 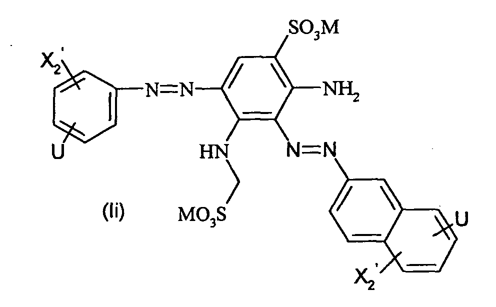 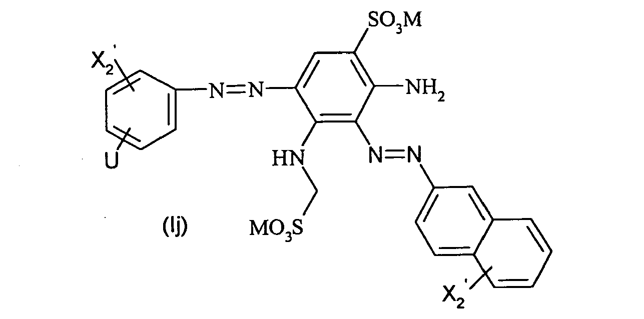 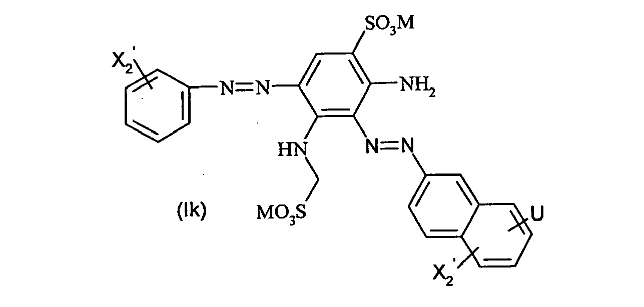 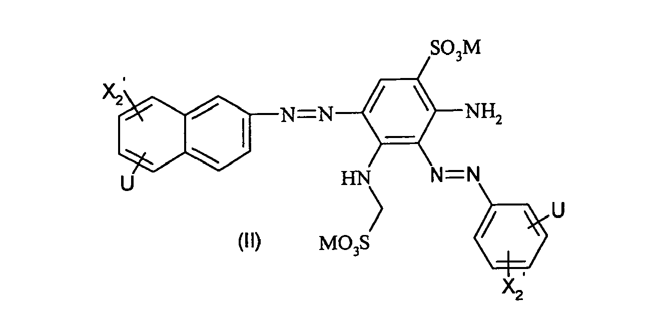 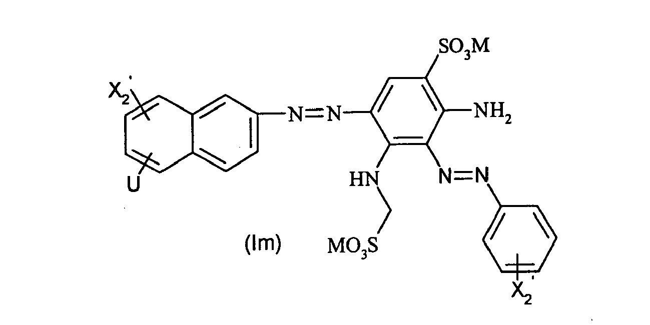 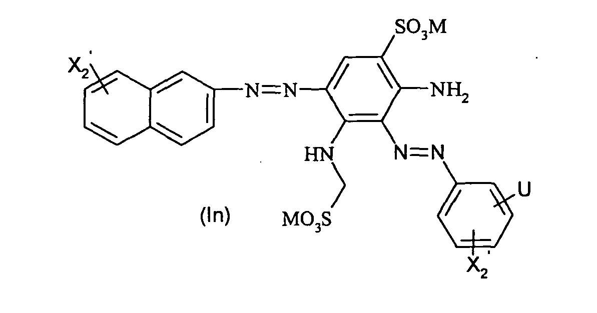 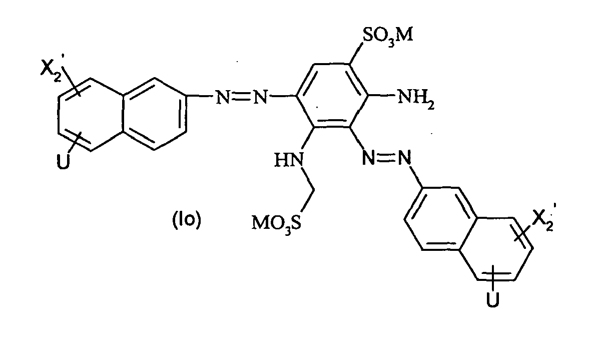 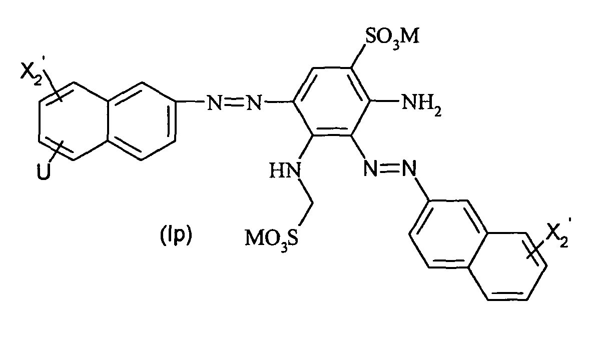 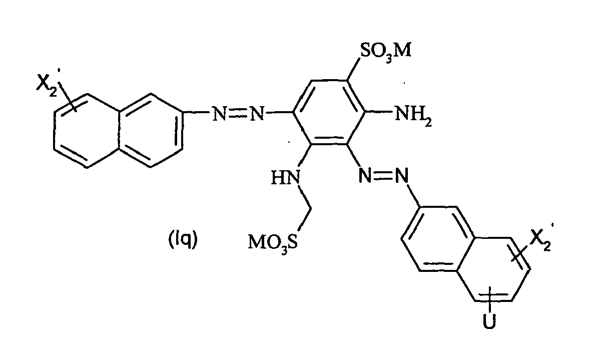 where in each case
M is hydrogen or sodium and
X₂' is hydrogen, methyl, ethyl, methoxy, ethoxy, COOM or SO₃M and
U is -SO₂CH₂CH₂OSO₃M, -SO₂CH = CH₂ or -NH-U', in which M is hydrogen or sodium and U' is one of the formulae 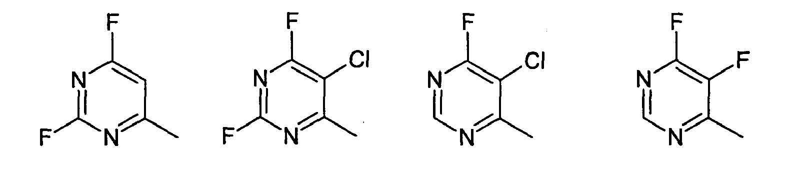 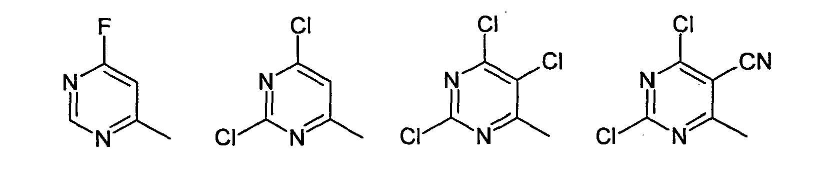 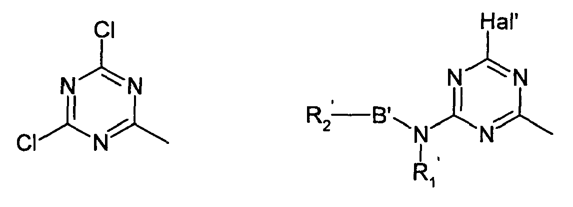
where
Hal' is chloro or fluoro,
R₁' is hydrogen, methyl, ethyl or phenyl,
B' is ethylene, propylene or -CH₂CH₂-O-CH₂CH₂- and
R₂' is -SO₂CH₂CH₂OSO₃M or -SO₂CH = CH₂.

10. A process for preparing a dye of the general formula (I) as claimed in one or more of claims 1 to 9, which comprises diazotizing an aromatic amine of the general formula (V) 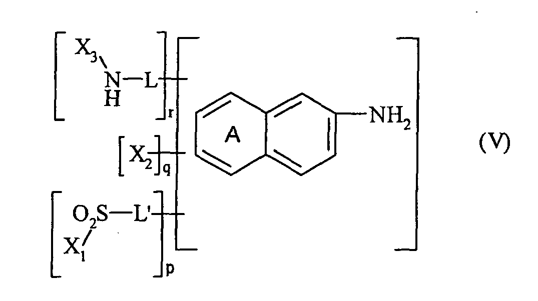 where p, q, r, L, X₁, X₂ and X₃ are as defined in claim 1 and coupling the diazonium compound with a compound of the general formula (VI)

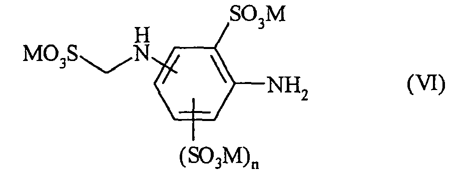

11. The use of a dye of the general formula (I) as claimed in one or more of claims 1 to 9 for dyeing and printing hydroxyl- and/or carboxamido-containing material, especially fiber material.

## Revendications

1. Colorants de formule générale (I) 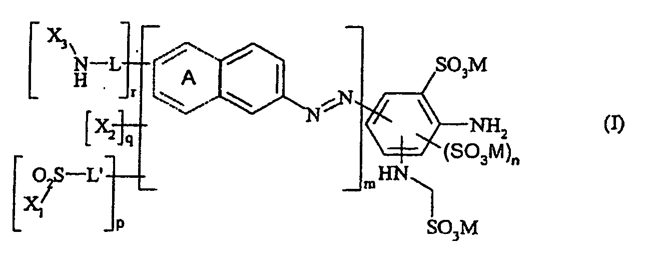 dans laquelle
m vaut 1 ou 2,
n vaut 0 ou 1,
q vaut 0, 1, 2 ou 3, et
p vaut 0, 1 ou 2,
r vaut 0, 1 ou 2, où
p + r vaut 1 ou 2, et
X₁ représente un radical -CH₂CH₂Z ou -CH=CH₂, où Z représente un groupement qui peut être éliminé par l'action d'un alcali,
M représente un hydrogène, un ammonium, un métal alcalin ou l'équivalent d'un métal alcalino-terreux,
X₂ représente un alkyle, un alcoxy, un halogène, un COOM ou un SO₃M,
L représente une liaison directe ou un alkylène,
L' représente une liaison directe ou un groupe de formule 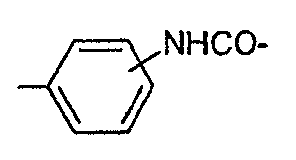
X₃ représente un groupe réactif hétérocyclique de formule générale (IIa) ou (IIb) 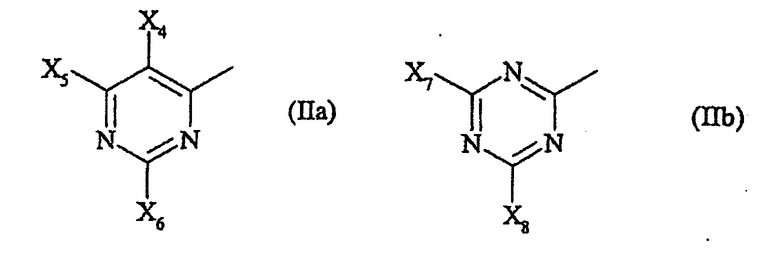 ou un groupe réactif de formule (IIc), (IId) ou (IIe) 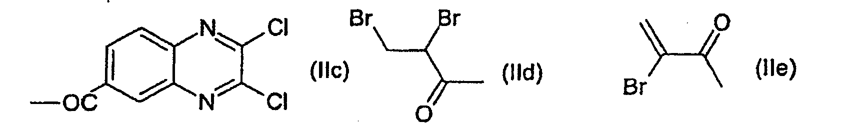
dans laquelle
X₄ à X₆ représentent indépendamment, les uns des autres, un hydrogène ou un halogène, à condition qu'au moins l'un des radicaux X₄ à X₆ soit un halogène,
X₇ représente un halogène ou X₈, et
X₈ représente un substituant de formule générale (III) 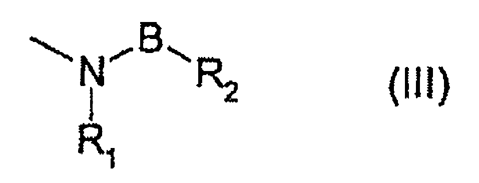 dans laquelle
R₁ représente un hydrogène, un alkyle ou un aryle,
B représente un alkylène, un alkylène interrompu par un atome d'oxygène, un arylène ou un arylalkylène, et
R₂ représente un radical SO₃M, SO₂-CH₂CH₂Z ou SO₂-CH=CH₂,
où Z est défini comme indiqué ci-dessus, et où
le noyau **caractérisé par** A est soit absent, soit présente.

2. Colorant selon la revendication 1, **caractérisé en ce que** X₂ représente un alkyle en C₁-C₄, un alcoxy en C₁-C₄ ou un SO₃M, dans lequel M est défini comme indiqué dans la revendication 1.

3. Colorant selon la revendication 1 et/ou 2, **caractérisé en ce que** X₃ représente un groupe de formule 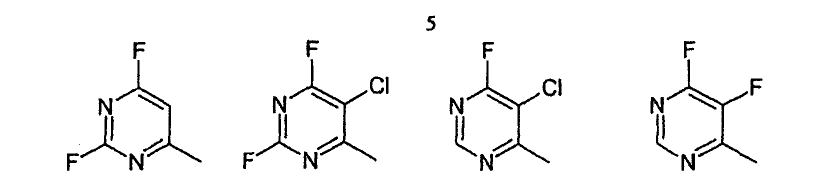 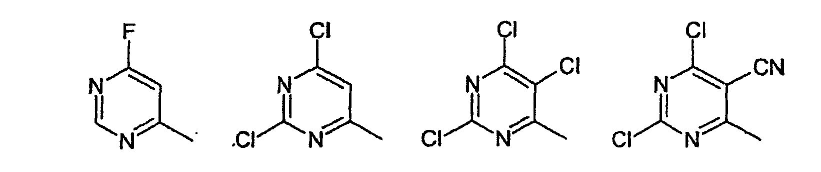 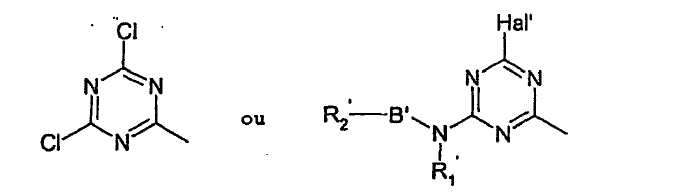 dans laquelle
Hal' représente un chlore ou un brome,
R₁' représente un hydrogène, un méthyle, un éthyle ou un phényle,
B' représente un éthylène, un propylène ou un -CH₂CH₂-O-CH₂CH₂-, et
R₂' représente un -SO₂CH₂CH₂OSO₃M ou un -SO₂CH=CH₂ .

4. Colorant selon l'une ou plusieurs des revendications 1 à 3, **caractérisé en ce que** m vaut 1.

5. Colorant selon l'une ou plusieurs des revendications 1 à 3, **caractérisé en ce que** m vaut 2.

6. Colorant selon l'une ou plusieurs des revendications 1 à 5, **caractérisé en ce qu'**il correspond à la formule générale (Ia) 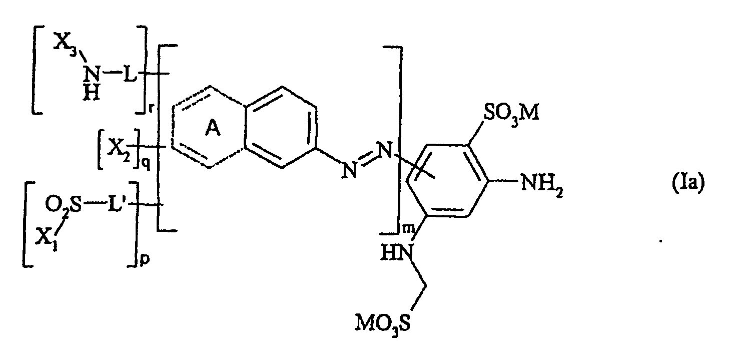 dans laquelle X₁ à X₃, A, L, L', M, m, r, p et q sont définis comme indiqué dans la revendication 1.

7. Colorant selon l'une ou plusieurs des revendications 1 à 3 ou 4 à 6, **caractérisé en ce qu'**il correspond à la formule générale (Ib) 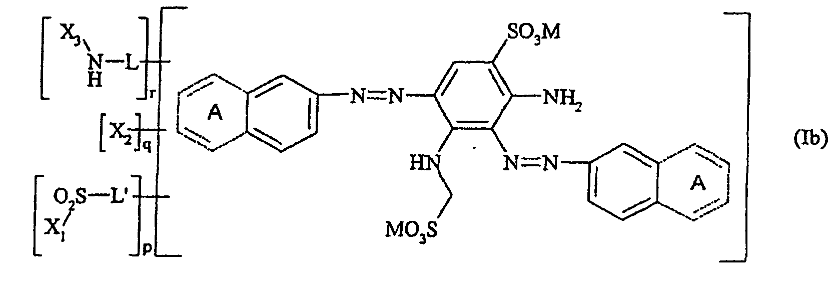 dans laquelle X₁ à X₃, A, L, L' , M, r, p et q sont définis comme indiqué dans la revendication 1.

8. Colorant selon l'une ou plusieurs des revendications 1 à 4 ou 6, **caractérisé en ce qu'**il correspond à la formule générale (Ic) 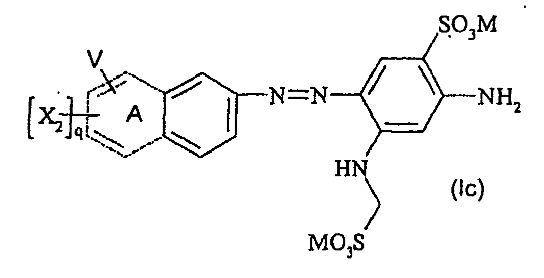 dans laquelle M, A, X₂ et q sont définis comme indiqué dans la revendication 1, et V représente un X₃-NH-L- ou un X₁-O₂S-L'-, dans lesquels X₁, X₃, L et L' sont définis comme indiqué dans la revendication 1.

9. Colorant selon l'une ou plusieurs des revendications 1 à 8, **caractérisé en ce qu'**il correspond à l'une des formules générales (Id) à (Iq) 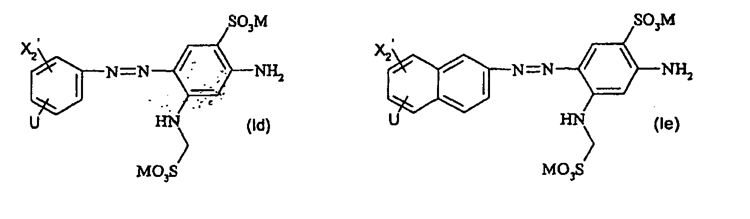 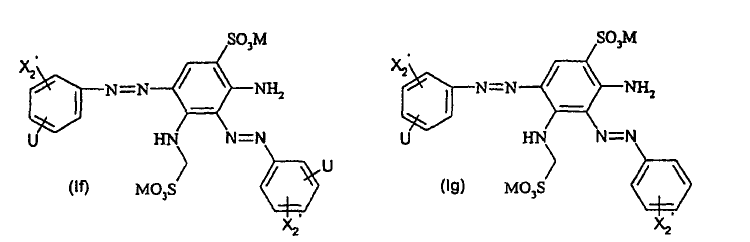 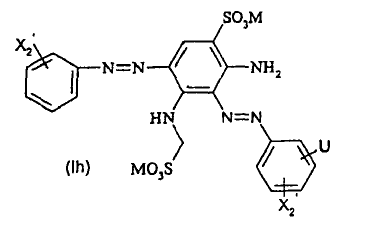 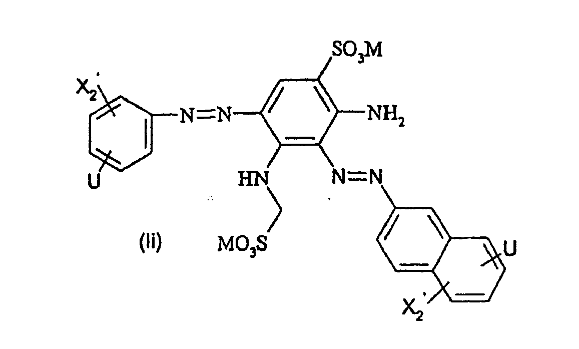 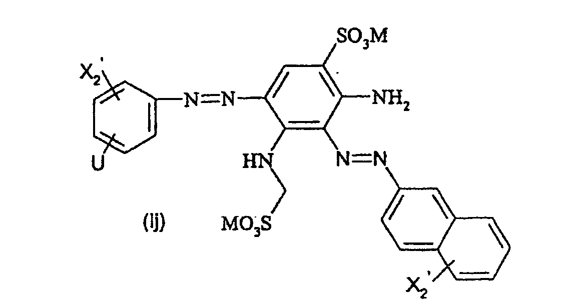 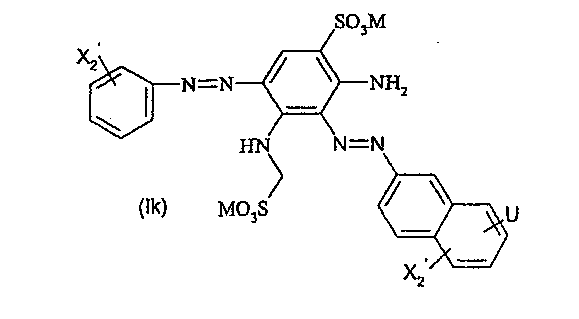 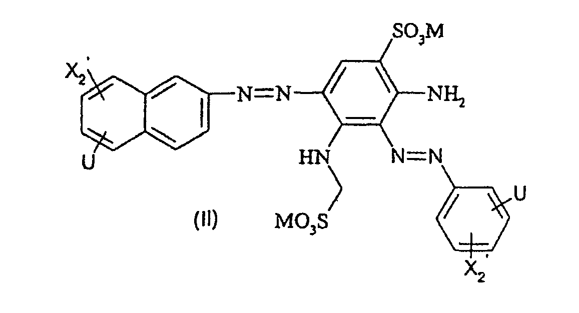 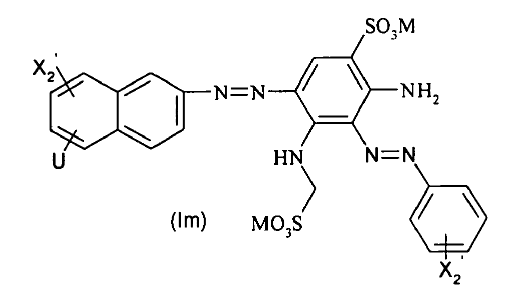 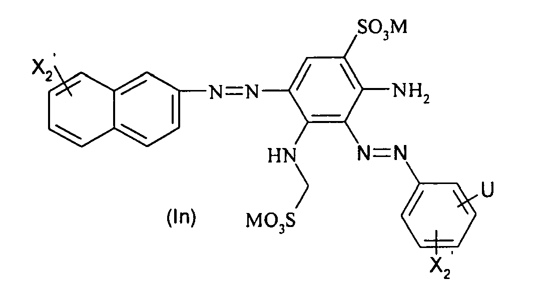 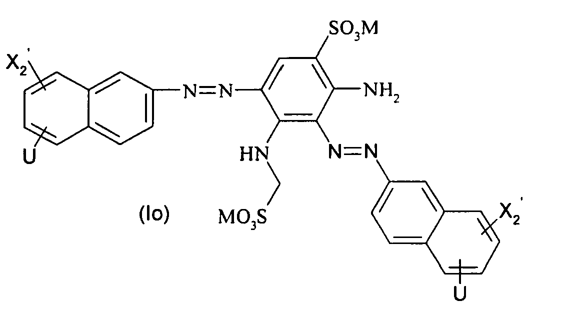 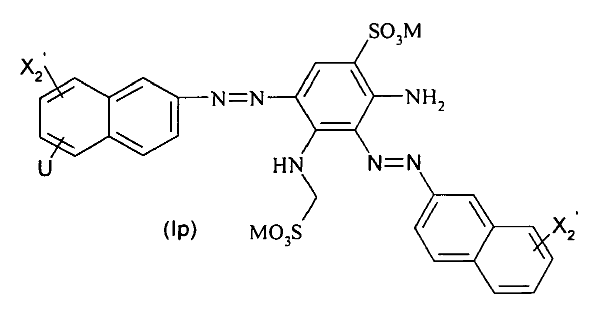 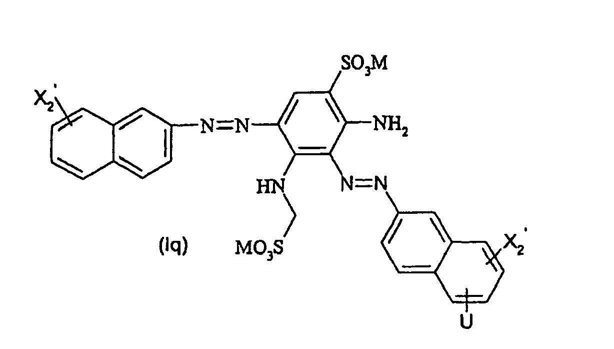 dans lesquelles, dans chaque cas,
M représente un hydrogène ou un sodium, et
X₂' représente un hydrogène, un méthyle, un éthyle, un méthoxy, un éthoxy, un COOM ou un SO₃M, et
U représente un -SO₂CH₂CH₂OSO₃M, un -SO₂CH=CH₂ ou un -NH-U', dans lesquels M représente un hydrogène ou un sodium, et U' représente l'une des formules 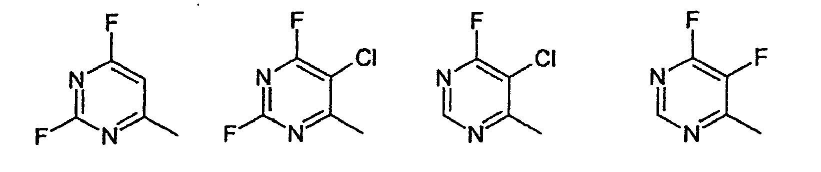 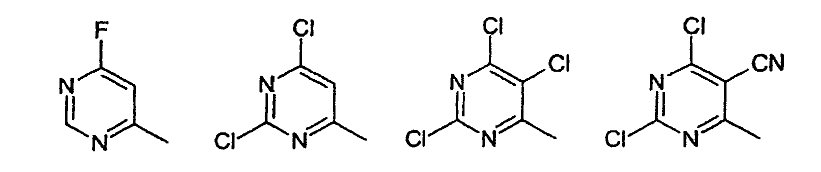 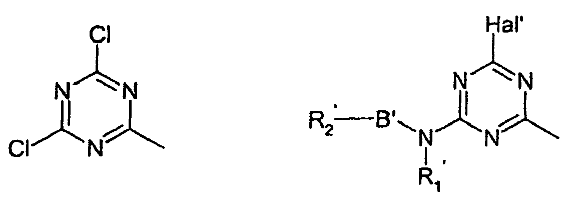
dans lesquelles
Hal' représente un chlore ou un fluor,
R₁' représente un hydrogène, un méthyle, un éthyle ou un phényle,
B' représente un éthylène, un propylène ou un -CH₂CH₂-O-CH₂CH₂-, et
R₂' représente un -SO₂CH₂CH₂OSO₃M ou un -SO₂CH=CH₂.

10. Procédé de préparation d'un colorant de formule générale (I) selon l'une ou plusieurs des revendications 1 à 9, **caractérisé en ce qu'**une amine aromatique de formule générale (V) 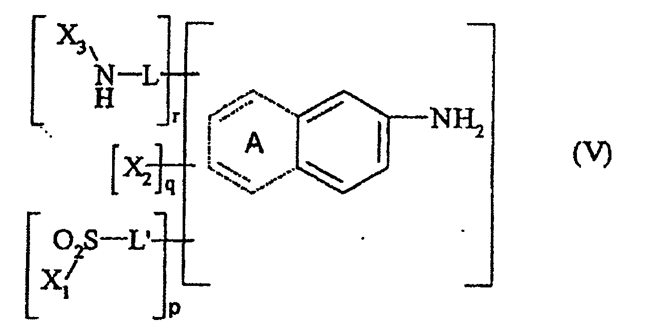 dans laquelle p, q, r, L, X₁, X₂ et X₃ sont définis comme indiqué dans la revendication 1,
est diazotée et couplée sur un composé de formule générale (VI)

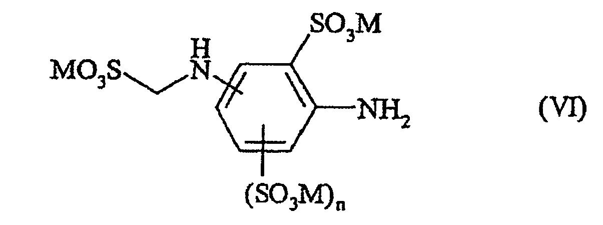

11. Utilisation d'un colorant de formule générale (I) selon l'une ou plusieurs des revendications 1 à 9, pour la teinture ou l'impression d'une matière renfermant des groupes hydroxy et/ou carboxamide, en particulier d'une matière fibreuse.
